(19) Europäisches Patentamt
European Patent Office
Office européen des brevets

(11) **EP 1 684 479 B1**

(12) **EUROPEAN PATENT SPECIFICATION**

(45) Date of publication and mention of the grant of the patent:
**06.06.2007 Bulletin 2007/23**

(51) Int Cl.:
*H04L 27/26* (2006.01)

(21) Application number: **05001462.0**

(22) Date of filing: **25.01.2005**

(54) **Method and system for impulse noise rejection in an OFDM system**

Verfahren und System zur impulsrauschunterdrückung in einem OFDM-Ssystem

Procédé et système de réjection de bruit d'impulsions dans un système MDFO

(84) Designated Contracting States:
**DE FR GB IT NL**

(43) Date of publication of application:
**26.07.2006 Bulletin 2006/30**

(73) Proprietor: **Afa Technologies, Inc.**
**Hsin-Tien City,**
**Taipei Hsien (TW)**

(72) Inventor: **Chen, Tsung-Liang**
**Yung-Kang City**
**Tainan Hsien**
**Taiwan (CN)**

(74) Representative: **Schaeberle, Steffen**
**Hoefer & Partner,**
**Patentanwälte,**
**Gabriel-Max-Strasse 29**
**81545 München (DE)**

(56) References cited:
**EP-A- 1 180 851**          **WO-A-03/073683**
**GB-A- 2 388 500**

- **KERPEZ K J: "MINIMUM MEAN SQUARED ERROR IMPULSE NOISE ESTIMATION AND CANCELLATION" IEEE TRANSACTIONS ON SIGNAL PROCESSING, IEEE, INC. NEW YORK, US, vol. 43, no. 7, 1 July 1995 (1995-07-01), pages 1651-1662, XP000524103 ISSN: 1053-587X**
- **SLISKOVIC M: "Signal processing algorithm for OFDM channel with impulse noise" ELECTRONICS, CIRCUITS AND SYSTEMS, 2000. ICECS 2000. THE 7TH IEEE INTERNATIONAL CONFERENCE ON DEC. 17-20, 2000, PISCATAWAY, NJ, USA,IEEE, vol. 1, 17 December 2000 (2000-12-17), pages 222-225, XP010535693 ISBN: 0-7803-6542-9**
- **SLISKOVIC M: "Impulse noise detection algorithms for multicarrier communication systems -performance analysis" ISPA 2001. PROCEEDINGS OF THE 2ND INTERNATIONAL SYMPOSIUM ON IMAGE AND SIGNAL PROCESSING AND ANALYSIS. IN CONJUNCTION WITH 23RD INTERNATIONAL CONFERENCE ON INFORMATION TECHNOLOGY INTERFACES (IEEE CAT. NO. 01EX480) UNIV. ZAGREB ZAGREB, CROATIA, 2001, pages 496-501, XP002334979 ISBN: 953-96769-4-0**

EP 1 684 479 B1

**Description**

The present invention relates to methods and systems for rejecting impulse noise in an OFDM communications system according to the pre-characterizing clause of claim 1.

Orthogonal frequency division multiplexing (OFDM) is a popular multi-carrier modulation technique found in today's communications standards such as digital audio broadcasting (DAB), digital video broadcasting (DVB), wireless LAN, ADSL, and HomePlug. Modern OFDM digital communications systems are flexible and reliable for transmission in frequency selective fading channels with low carrier to noise (C/N) ratio. Because of the orthogonality among subcarriers, each subcarrier can be adapted to different transmission rate according to the channel condition. Furthermore, channel coding is often used in conjunction with OFDM modulation for error correction. These techniques enable robust communications in extremely hostile environment.

However, OFDM communications systems are particularly susceptible to impulse noise, which is short duration and high-energy interference generated by passing traffic or domestic electric appliances. Strong impulse noise may cause analog-to-digital converter (ADC) of the receiver to clip or saturate. Impulse noise is wide-band noise that affects all subcarriers and causes severe performance degradation.

Conventionally, the effect of ADC clipping is not taken into account. Therefore, they are not applicable to the problem at hand. In European Patent No. 1180851 and European Patent No. 1180851, Dawkins et al. and Haffenden et al. teach methods for blanking input signals in time domain in order to zero out ADC output samples affected by impulse noise.

There is another category of methods for impulse noise rejection in the prior art. Jukka in Publication No. WO03073683, Asjati in British Patent No. 2388500, and Sliskovic in "Signal Processing Algorithm for OFDM. Channel with Impulse Noise", Electronics, Circuits and Systems, 2000, ICECS 2000, The 7th IEEE International Conference on December 17 - 20, 2000, Piscataway, NJ, USA, IEEE, vol. 1, 17. December 2000, pages 222 - 225, achieved good impulse noise rejection by using pilot subcarriers in frequency domain. Knowledge of pilot subcarriers is used for impulse noise estimation in these prior arts. The estimated noise is transformed to time domain for noise cancellation.

In particular, GB-A-2 388 500 A discloses a noise burst estimation and cancellation in OFDM carriers, wherein an estimated noise corresponding to the noise burst is generated, several estimated versions of the noise burst signal are then provided by an inverse Fourier transform of the estimated noise signal, the estimated noise signal is further interpolated and the noise signal estimate is cancelled from the symbol in the frequency domain for data recovery.

Further, WO 03/073683 A discloses a method and system for receiving a multi-carrier signal. In particular, the method and system tolerate the impulse of burst noise in pilot-based OFDM systems, especially using the DVB-T standard. The method contains the steps: (1) recognition of the impulse position and possibly length in the time domain symbol, (2) blanking of those samples of the symbols where significant amount of impulse noise is present, (3) calculating the first estimate of the received signal from the blanked symbol, (4) using a prior information to calculate an estimate of the blanked symbol using inverse FFT on the differences of the observed carrier values from the known values in the frequency domain, wherein guard band carriers or pilot carriers are used as prior information, (5) deriving correction values for the frequency domain carriers taking the FFT of the restored time domains samples and (6) derive the corrected estimate of the received symbol by summing the correction values of step (5) to the first estimate of carriers derived in step (3).

This in mind, the present invention aims at providing a further system and related methods for impulse noise rejection in an orthogonal frequency division multiplexing (OFDM) communications system.

This is achieved by a pilot-based impulse noise rejection apparatus for use in OFDM communications systems according to claim 1 and claim 11 and a related method according to claim 21. The dependent claims pertain to corresponding further developments and improvements.

As will be seen more clearly from the detailed description following below, the claimed system for rejecting impulse noise in an OFDM communications system has low implementation complexity and low power consumption. The system is operable in real time to reject impulse noise.

In the following, the invention is further illustrated by way of example, taking reference to the accompanying drawings. Thereof:

Fig. 1 is a block diagram of a prior art OFDM receiver capable of performing blanking in time domain;
Fig. 2 is a block diagram of a prior art OFDM receiver;
Fig. 3 is a block diagram of the first embodiment of the present invention impulse noise rejection system. Fig. 4 is a block diagram of the first embodiment of the present invention frequency domain impulse noise rejection module;
Fig. 5 is a block diagram of the second embodiment of the present invention frequency domain impulse noise rejection module;
Fig. 6 is a block diagram of the second embodiment of the present invention impulse noise rejection system;
Fig. 7 is a diagram illustrating the first different condition of the position of impulse noise in a symbol;

Fig. 8 is a diagram illustrating the second different condition of the position of impulse noise in a symbol;

Fig. 9 is a diagram illustrating the third different condition of the position of impulse noise in a symbol;

Fig. 10 is a diagram illustrating the fourth different condition of the position of impulse noise in a symbol;

Fig. 11 is a block diagram of an embodiment of the present invention impulse noise detector;

Fig. 12 is a block diagram of an embodiment of the present invention saturation detector;

Fig. 13 is a block diagram of a present invention FFT module including an impulse noise suppressor;

Fig. 14 is a block diagram of the third embodiment of the present invention impulse noise rejection system;

Fig. 15 is a block diagram of the third embodiment of the present invention frequency domain impulse noise rejection module;

Fig. 16 is a block diagram of the fourth embodiment of the present invention impulse noise rejection system;

Fig. 17 is a constellation diagram of signals not being processed by the present invention impulse noise rejection; and

Fig. 18 is a constellation diagram of signals being processed by the present invention impulse noise rejection.

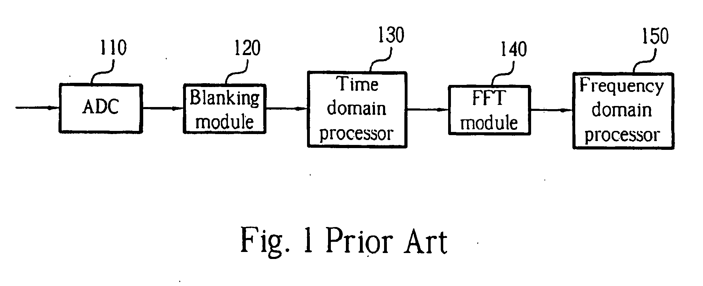

Please refer to Fig. 1. Figure 1 illustrates an OFDM receiver capable of performing blanking in time domain in accordance with the prior art method for blanking input signals in time domain in order to zero out ADC output samples affected by impulse noise. The input analog signals are converted into digital signals by an ADC 110 first. If impulse noise is detected in the input signals, the blanking module 120 zeros out the affected samples before transmitting the signals into the fast Fourier transform (FFT) module 140 such that the samples affected by impulse noise will not further destroy operations of the frequency domain processor 150 following the FFT module 140. However, these methods have limited performance because known structures of the transmitted signal are not utilized, e.g., the pilot subcarriers.

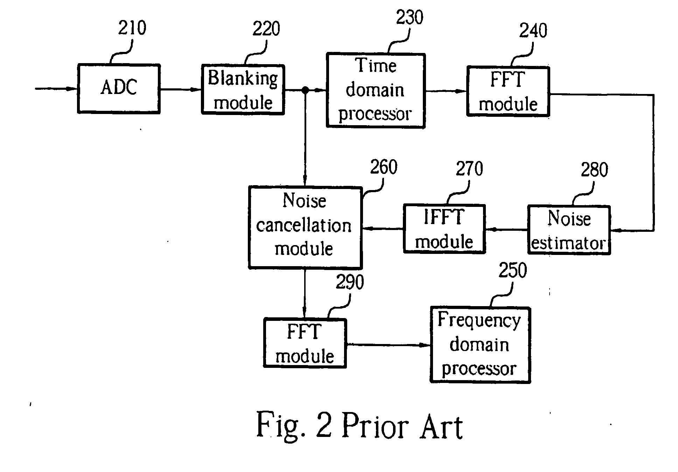

A typical realization of a conventional receiver using pilot subcarriers in frequency domain is illustrated in Fig. 2. Impulse noise is estimated in a noise estimator 280 with knowledge of pilot subcarriers. The estimated noise is then sent into an inverse FFT (IFFT) module 270 for being transformed inversely to time domain signals. A noise cancellation module 260 is adapted for canceling the IFFT of estimated noise from the signals output from the blanking module 220. The output of the noise cancellation module 260 is further sent to an FFT module 290 for performing fast Fourier transformation. And the output of the FFT module 290 will be transmitted to the frequency domain processor 250 for advanced processing. However, this class of methods requires extra hardware/software for solving of complicated mathematical equations. Hence, long processing delay is introduced.

This invention discloses an effective method with a system of concise structure for detecting and rejecting impulse noise in OFDM communications systems. In the present invention, knowledge of pilot subcarriers is utilized, and signals are down-converted to a slow-varying waveform before interpolation. The disclosed method has high impulse noise rejecting capability. The disclosed system has low hardware complexity, and thus low power consumption compared to the known prior arts. The present invention can be used to remove impulse noise in OFDM signals in real time.

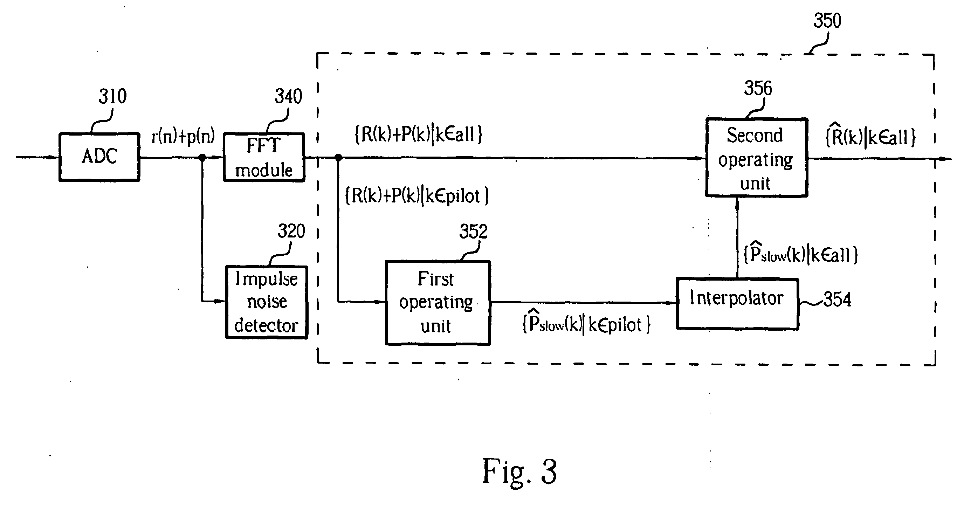

Please refer to Fig. 3. Fig. 3 is a block diagram of the first embodiment of the present invention impulse noise rejection system. Analog input signals are converted to digital signals by an analog-to-digital converter (ADC) 310. The received signal including Gaussian noise can be modeled by equation (1):

$$r(n) = x(n) \otimes h(n) + v(n), n \in \{1, \cdots, N\} \tag{1}$$

where:

$n$ :      Sample index,

$x(n)$ :      Transmitted signal,

$h(n)$ :      Channel impulse response,

$v(n)$ :      Gaussian noise,

$N$ :      FFT size, and

$\otimes$ :      Convolution operation.

When impulse noise is present, the time domain received signal can be modeled by equation (2):

$$r(n) + p(n) \tag{2}$$

where $p(n)$ is the impulse noise.

An FFT module 340 is in charge of transforming time domain samples output from the ADC 310 to frequency domain signals. The corresponding frequency domain representation of *r(n)+p(n)* is:

$$R(k) + P(k) \qquad\qquad (3)$$

wherein

$$R(k) = X(k) \cdot H(k) + V(k), k \in \{1, \cdots, N\} \qquad\qquad (4)$$

where:

$k$ :       Subcarrier index,
$X(k)$ :       Transmitted constellation point for subcarrier k,
$H(k)$ :       Channel gain for subcarrier k,
$V(k)$ :       Noise for subcarrier k, and
$N$ :       FFT size.

The symbols output from the ADC 310 are sent into an impulse noise detector 320 as well for detecting presence of impulse noise in symbols output from the ADC 310. When the presence of impulse noise in a symbol is detected, R(k)+P(k) output from the FFT module is transmitted into a frequency domain impulse noise rejection module 350. The frequency domain impulse noise rejection module 350 includes a first operating unit 352 coupled to the FFT module 340, an interpolator 354 coupled to the first operating unit 352, and a second operating unit 356 coupled to the FFT module 340 and the interpolator 354. The frequency domain signals *R(k)+P(k)* at pilot subcarriers are extracted and utilized for generating estimated impulse noise at pilot subcarriers in a slow-varying waveform according to predicted pilot subcarriers of the OFDM communications system and signals received from the FFT module. The predicted pilot subcarriers are known with pilot values and estimated/predicted channel gain, and are represented as equation (5):

$$\hat{R}(k) \mid k \in \{pilot\ subcarriers\} \qquad\qquad (5)$$

The impulse noise P(k)is unknown to the receiver, except at the pilot subcarriers . That is, the impulse noise is estimated at the pilot subcarriers as follows:

$$\hat{P}(k) = R(k) + P(k) - \hat{R}(k), k \in \{pilot\ subcarriers\} \qquad\qquad (6)$$

For obtaining impulse noise at all subcarriers, we need to interpolate the estimated impulse noise at pilot subcarriers $\hat{P}$ (k), $k \in$ {*pilot subcarriers*}. However, interpolation cannot be performed correctly when the waveform changes fast. Therefore, in the present invention, a down-conversion is performed by the first operating unit 352 for converting the estimated impulse noise at pilot subcarriers {$\hat{P}(k) | k \in$ *pilot subcarriers*} into a slow-varying waveform:

$$\hat{P}_{slow}(k) \mid \hat{P}(k) \cdot e^{-j2\pi kd/N}, k \in \{pilot\ subcarriers\} \qquad\qquad (7)$$

Note that d is a given descriptor generated according to some algorithm for providing an appropriate frequency for down-converting the estimated impulse noise at pilot subcarriers. The algorithm utilized to generate and optimize the descriptor d can be various.

The estimated impulse noise at the pilot subcarriers in the slow-varying waveform {$\hat{P}_{slow}(k) | \hat{P}(k) \cdot e^{-j2\pi kd/N}, k \in$ *pilot subcarriers*} is input to the interpolator 354 for being interpolates in order to obtain estimated impulse noise at all subcarriers of the OFDM communications system in the slow-varying waveform:

$$\{\hat{P}_{slow}(k) \mid k \in pilot\ subcarriers\} \quad \overset{Interpolation}{\Rightarrow} \quad \{\hat{P}_{slow}(k) \mid k \in all\ subcarriers\} \quad (8)$$

The estimated impulse noise at all subcarriers of the OFDM communications system in the slow-varying waveform is sent into the second operating unit 356. In the second operating unit 356, a subtraction and an up-conversion opposite to the down-conversion in the first operating unit are carried out for generating estimated impulse noise free signals at all subcarriers in a fast-varying waveform:

$$\hat{R}(k) \mid R(k) + P(k) - \hat{P}(k),\ k \in \{all\ subcarriers\} \quad (9)$$

where

$$\hat{P}(k) \mid \hat{P}_{slow}(k) \cdot e^{+j2\pi kd/N},\ k \in \{all\ subcarriers\} \quad (10)$$

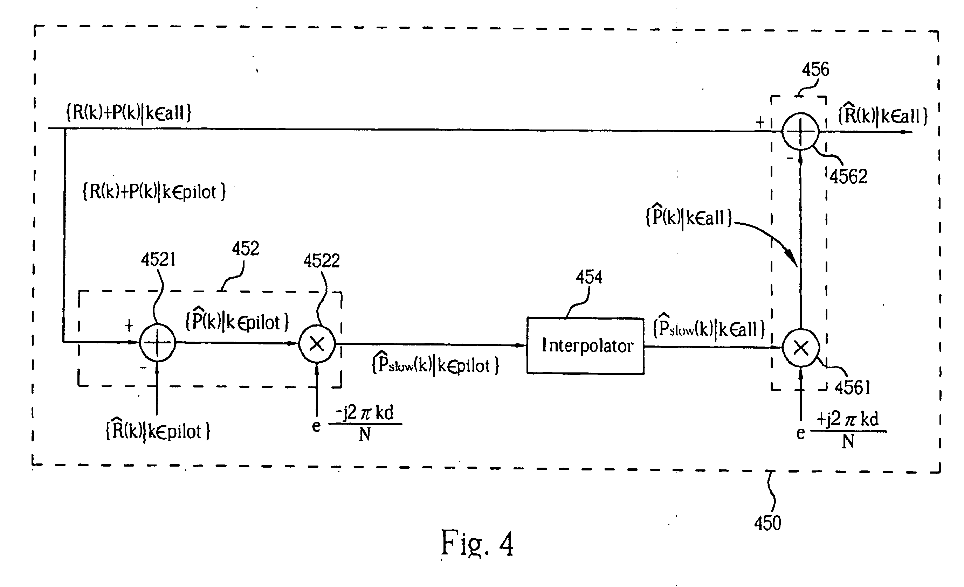

There can be various implementations of the frequency domain impulse noise rejection module as long as the first operating unit can generate estimated impulse noise at pilot subcarriers in a slow-varying waveform according to predicted pilot subcarriers of the OFDM communications system and signals received from the FFT module, and the second operating unit can generate estimated impulse noise free signals at all subcarriers in a fast-varying waveform according to the estimated impulse noise at all subcarriers of the OFDM communications system in the slow-varying waveform. Please refer to Fig. 4. Fig. 4 is a block diagram of the first embodiment of the present invention frequency domain impulse noise rejection module 450 meeting the requirement above. The first operating unit 452 of the frequency domain impulse noise rejection module 450 includes a subtracter 4521 and a converter 4522. The subtracter 4521 is utilized to subtract the predicted pilot subcarriers $\hat{R}(k)|(k \in \{pilot\ subcarriers\}$ from the received signals at pilot subcarriers $\{R(k)+P(k)|k \in pilot\ subcarriers\}$ in order to obtain the estimated impulse noise at pilot subcarriers $\hat{P}(k),\ k \in \{pilot\ subcarriers\}$, which is represented in eq. (6). The estimated impulse noise at pilot subcarriers is further input to the converter 4522 for being down-converted into the slow-varying waveform according to a descriptor d. The interpolator 454 interpolates the estimated impulse noise at pilot subcarriers in the slow-varying waveform into the estimated impulse noise at all subcarriers in the slow-varying waveform:

$$\{\hat{P}_{slow}(k) \mid k \in pilot\ subcarriers\} \quad \overset{Interpolation}{\Rightarrow} \quad \{\hat{P}_{slow}(k) \mid k \in all\ subcarriers\}$$

The second operating unit 456 includes a converter 4561 and a subtracter 4562. The converter 4561 up converts the input estimated impulse noise at all subcarriers in the slow-varying waveform $\{\hat{P}_{slow}(k)|k \in all\ subcarriers\}$ into the estimated impulse noise at all subcarriers in the fast-varying waveform according to the same descriptor d. The estimated impulse noise at all subcarriers in the fast-varying waveform $\{\hat{P}(k) \mid \hat{P}_{slow}(k) \cdot e^{+j2\pi kd/N}, k \in all\ subcarriers\}$ is subtracted from the received signals at all subcarriers $\{R(k)+P(k)|k \in pilot\ subcarriers\}$ in order to obtain the estimated impulse noise free signals at all subcarriers in a fast-varying waveform:

$$\hat{R}(k) \mid R(k) + P(k) - \hat{P}(k),\ k \in \{all\ subcarriers\}\ .$$

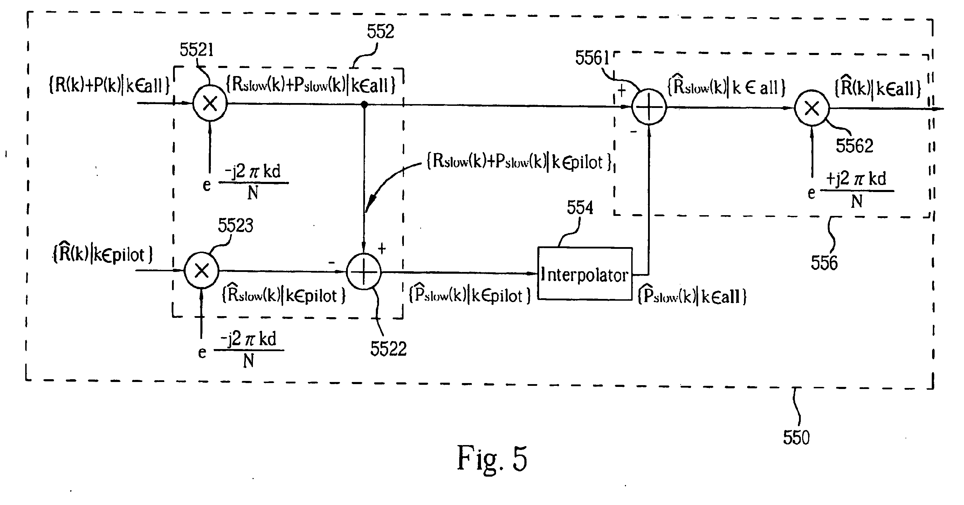

Beside the structure shown in Fig. 3, the design of the present invention frequency domain impulse noise rejection module can be different. Please refer to Fig. 5. Fig. 5 is a block diagram of the second embodiment of the present invention frequency domain impulse noise rejection module 550. The first operating unit 552 of the frequency domain impulse noise rejection module 550 includes a converter 5521, a subtracter 5522 and a converter 5523. The converter 5521 is utilized to down-convert the received signals $\{R(k)+P(k)|k \in all\ subcarriers\}$ into a slow-varying waveform $\{R_{slow}(k)+P_{slow}(k)|k \in all\ subcarriers\}$ . The converter 5523 is utilized to down-convert the predicted pilot subcarriers

$\hat{R}(k)|k \in \{pilot\ subcarriers\}$ into the slow-varying waveform:

$$\hat{R}_{slow}(k)\,|\,\hat{R}\,(k)\cdot e^{-j2\pi kd/N}, k \in \{all\ subcarriers\}\ .$$

The subtracter 5522 is utilized to subtract the predicted pilot subcarriers in the slow-varying waveform $\hat{R}_{slow}(k)|k \in \{pilot\ subcarriers\}$ from the received signals at pilot subcarriers in the slow-varying waveform extracted from the received signals at all subcarriers in the slow-varying waveform in order to obtain the estimated impulse noise at pilot subcarriers in the slow-varying waveform $\hat{P}_{slow}(k), k \in \{pilot\ subcarriers\}$. The estimated impulse noise at pilot subcarriers in the slow-varying waveform is sent into the interpolator 554 for being interpolated into the estimated impulse noise at all subcarriers in the slow-varying waveform:

$$\{\hat{P}_{slow}(k)\,|\,k \in pilot\ subcarriers\} \quad \overset{Interpolation}{\Longrightarrow} \quad \{\hat{P}_{slow}(k)\,|\,k \in all\ subcarriers\}$$

The second operating unit 556 includes a subtracter 5561 and a converter 5562. The subtracter 5561 subtracts the signals generated by the interpolator 554 from the down-converted signals $\{R_{slow}(k)+P_{slow}(k)|k \in all\ subcarriers\}$ in order to obtain the estimated impulse noise free signals at all subcarriers in a slow-varying waveform:

$$\hat{R}_{slow}(k)\,|\,R_{slow}(k) + P_{slow}(k) - \hat{P}_{slow}(k), \{k \in all\ subcarriers\}\ .$$

The converter 5562 further up converts the estimated impulse noise free signals at all subcarriers in a slow-varying waveform into the estimated impulse noise free signals at all subcarriers in a fast-varying waveform according to the same descriptor d:

$$\hat{R}(k)\,|\,\hat{R}_{slow}(k)\cdot e^{+j2\pi kd/N}, k \in \{all\ subcarriers\}\ .$$

It is shown in Fig. 4 and Fig.5 that one of the innovations introduced by the present invention is to down-convert the signals into a slow-varying waveform such that the interpolation can be performed effectively in order to obtain estimated impulse noise at all subcarriers. And after the interpolation the down-converted signals will be up-converted back to the original frequency for obtaining the estimated impulse noise free signals at all subcarriers. Therefore, any structure and algorithm that helps to implement the aforementioned idea of the present invention frequency domain impulse noise rejection module is not beyond the claimed invention.

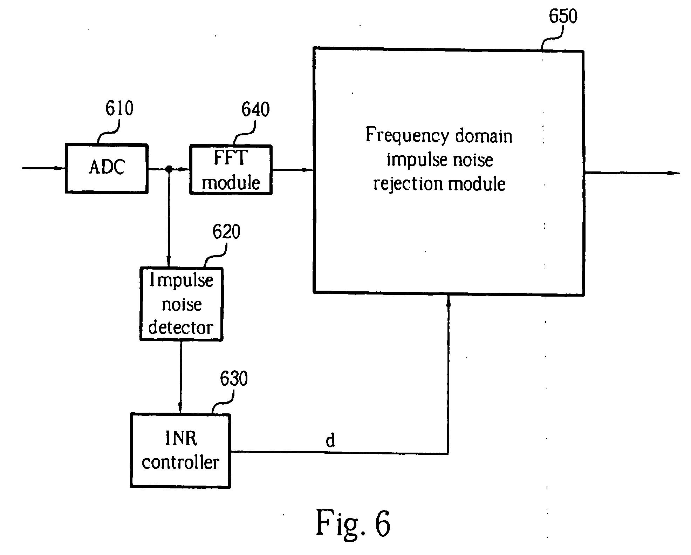

In the present invention frequency domain impulse noise rejection module, a descriptor d is adopted to decide the up-converting frequency and the down-converting frequency. The descriptor d is generated dynamically or is given fixed according to some algorithm for optimization. In the present invention, an impulse noise rejection controller (INR controller) is further introduced for generating the descriptor optimally. Please refer to Fig. 6. Fig. 6 is a block diagram of the second embodiment of the present invention impulse noise rejection system with an INR controller 630 added. When the presence of the impulse noise is detected by the impulse noise detector 620, the INR controller 630 generates a descriptor d according to positions of impulse noise events in the symbol for optimal noise estimation.

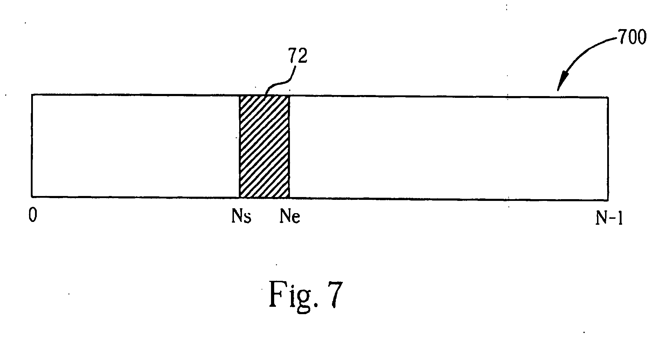

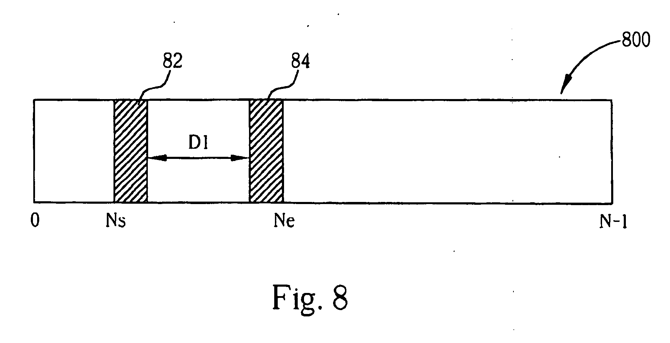

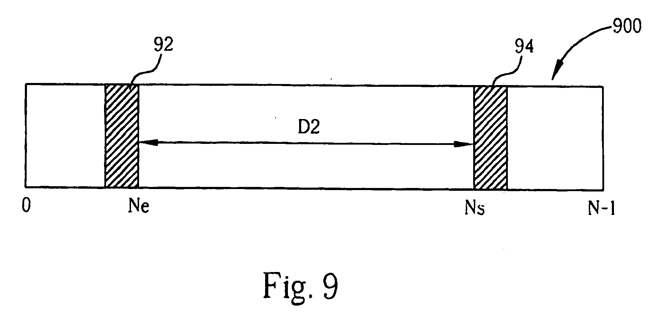

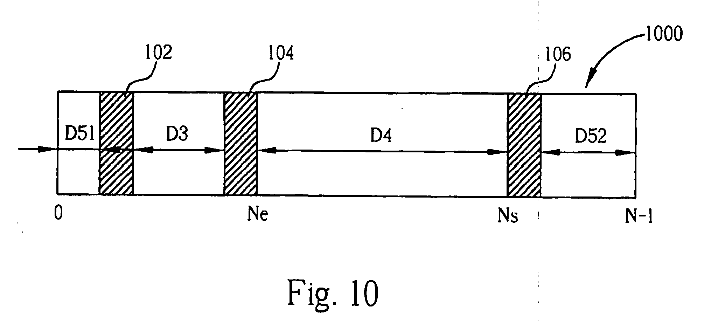

Please refer to Fig. 7 to Fig.10. Fig. 7, Fig. 8, Fig. 9 and Fig. 10 are diagrams illustrating four different conditions of the position of impulse noise in the symbol. The rule that the present invention INR controller decides the value of d will be shown through the descriptions of these diagrams. Here we follow the aforementioned assumption that one OFDM symbol contains N ADC output samples. Please refer to Fig. 7 first. The first condition shown in Fig. 7 is that there is only one impulse event 72 present in a symbol 700, with Ns representing the start position and Ne representing the end position. In this condition, the present invention INR controller can decides the descriptor d as (Ns+Ne)/2, that is, the center of the impulse event. When the frequency domain impulse noise rejection adopts the descriptor d to convert signals, the impulse noise is shifted to dc. Please refer to Fig. 8. Fig. 8 demonstrates a second condition of the position of impulse noise in a symbol 800. There are two impulse events 82 and 84 present in the symbol 800. The interval D1 between the impulse event 82 and the impulse event 84 is less than half of the length of symbol 800, that is, less than N/2. In this second condition, the start position of the preceding impulse event 82 is denoted as Ns and the end position of the following impulse event 84 is denoted as Ne. The present invention INR controller decides the descriptor d as (Ns+Ne)/2, that is, the center of the whole duration of the two impulse events 82 and 84. Please refer to Fig. 9. Fig. 9 shows a third condition of the position of impulse noise in a symbol 900. There are two impulse events 92 and 94 present in the symbol 900 with an interval D2 larger than half of the length of symbol 900, that is, D2 is larger than N/2. In this third condition, the end position of the preceding impulse event 92 is denoted as Ne and the start position of the following impulse event 94 is denoted as Ns. The present invention INR controller then decides the descriptor d as (Ns+Ne)/2. Please refer to Fig. 10. Fig. 10 is the fourth condition that is described. There are more than two impulse events 102, 104 and 106 present in a symbol 1000. The intervals between each two adjacent impulse events are D3, D4 and D5, where D5=D51+D52. Ns and Ne will be located according to the longest interval. In the example illustrated in Fig. 10, since D4 is the longest interval, Ns is located to represent the start position of the impulse event 106, and Ne is located to represent the end position of the impulse event 104. The present invention INR controller will still decide the descriptor d as (Ns+Ne) /2. In conditions shown in Fig. 9 and Fig. 10, the INR controller processes samples in a symbol circularly.

An example of computational procedure for obtaining the start position Ns (Start) and the end position Ne (End) of impulse events in an OFDM symbol is as follows:

```
Sample_counter = 0;
While (Computation_done = false) {
    If (Impulse noise event detected) {
    If (First impulse event detected) {
Start = Start of the first impulse event.
End = End of the first impulse event.
} Else {
  If (D>N/2) {
   Start = Start of the new impulse event.
   End = End + N.
   Computation done = true.
  } Else {
    End = End of the new impulse event.
  }
}
}
Sample_counter = Sample_counter + 1;
If. (Sample_counter is N)
 Computation done = true;
}
```

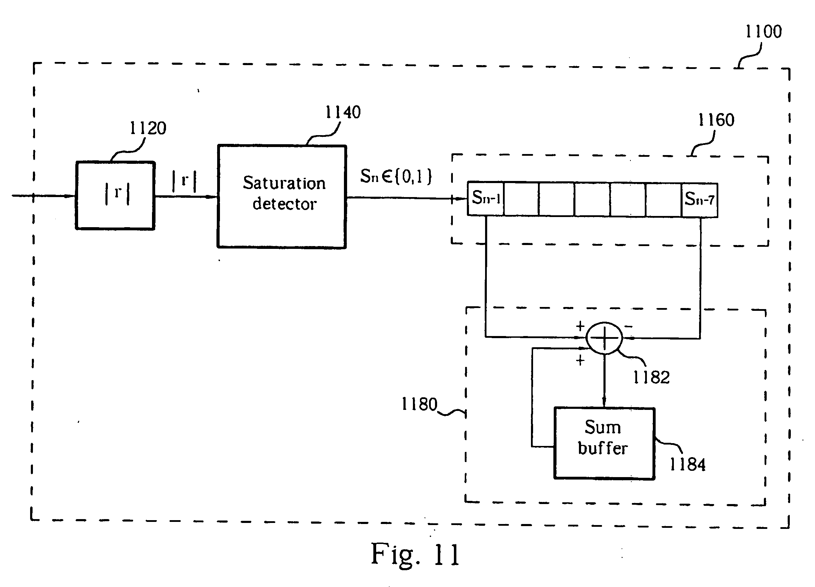

The impulse noise detector can also have different structures with different algorithms for detecting the presence of impulse noise in a symbol. Please refer to Fig. 11. Fig. 11 is a block diagram of an embodiment of the present invention impulse noise detector 1100. The present invention impulse noise detector 1100 includes an absolute value evaluator 1120, a saturation detector 1140, a buffer 1160 and a saturation calculator. The absolute value evaluator 1120 is utilized to calculate an absolute value of an input sample. The saturation detector 1140 is coupled to the absolute value evaluator 1120 for generating a first value when the input absolute value is greater than a threshold, that is, the incoming sample is determined saturated, and generating a second value when the input absolute value is not greater than the threshold. For example, the first value can be chosen as 1 and the second value can be chosen as 0:

$$s_n = \begin{cases} 1, & |r| >= threshold. \\ 0, & otherwise. \end{cases} \tag{10}$$

The buffer 1160 coupled to the saturation detector is adopted for buffering values from the saturation detector 1140.

The saturation calculator 1180 coupled to the buffer is utilized for calculating a sum of Q successive values generated by the saturation detector 1140. The impulse noise detector 1100 detects presence of impulse noise if the sum of Q successive values equals P, that is, there are at least P samples saturated among Q successive samples. The adder 1182 adds a value output from the saturation detector to a sum of preceding values and subtracts out a value that is put out of the buffer 1160. For example, assume Q and P are 7 and 5 respectively, $S_{n-7}$ is 0, the sum buffered in the sum buffer 1182 is 4, and $S_n$ is 1. After Sn is summed up with the sum buffered in the sum buffered 1184 and $S_{n-7}$ is subtracted out, the impulse noise detector 1100 will declare the presence of impulse noise.

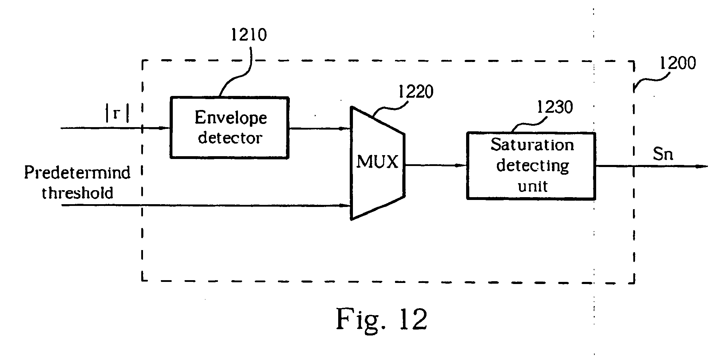

The saturation threshold can be a fixed predetermined value or can be adapted to signal variations with aid of signal envelop detection as well. Please refer to Fig. 12. Fig. 12 is a block diagram of an embodiment of the present invention saturation detector 1200. The claimed saturation detector 1200 includes an envelope detector 1210 for detecting the envelope of input signals of the saturation detector 1200, that is, for detecting the envelopes of input absolute values, in order to generate an adaptive threshold. The embodiment of the present invention saturation detector 1200 further includes a multiplexer 1220 providing the selectivity of the threshold of saturation. A predetermined threshold or the adaptive threshold according to the envelopes of input absolute values may be chosen selectively to determine whether the samples are saturated. The saturation detecting unit 1230 outputs Sn according to the saturation of samples.

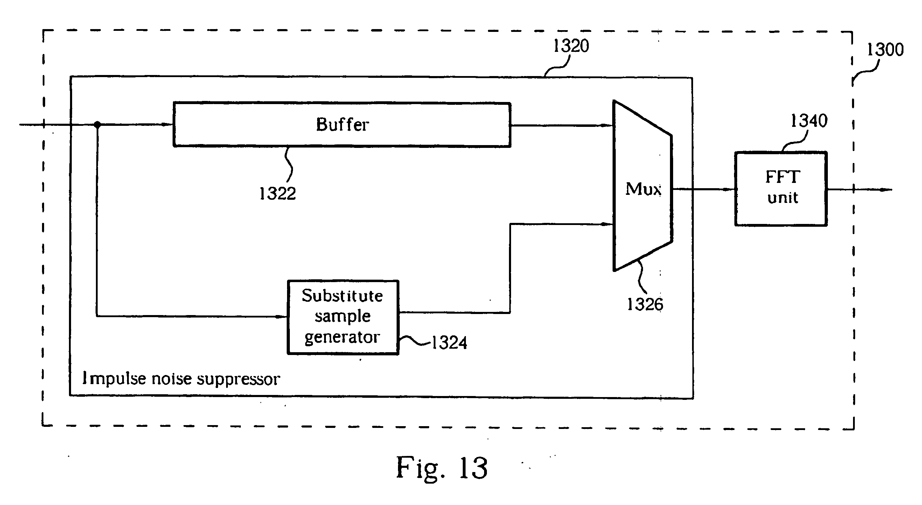

There is an optional module used to reduce adverse effects of impulse noises. Please refer to Fig. 13. Fig. 13 is a block diagram of a present invention FFT module 1300. In the FFT module 1300, an impulse noise suppressor 1320 is included for reducing power of impulse noises in advance, and an FFT unit 1340 is utilized to represent the function block of fast Fourier transformation. In the claimed invention, input samples are buffered by the buffer 1322. The multiplexer 1326 outputs samples from the buffer 1322 when the presence of impulse noise is not detected. However, while an impulse noise event is detected by the impulse noise detector of the present invention, content buffered in the buffer 1322 will be replaced by values generated by a substitute sample generator 1324. In a special case, the substitute sample generator simply outputs zero. In another special case, the substitute sample generator outputs average of past samples. One advantage of this implementation is that ADC output samples immediately preceding and following the detected impulse noise event are also suppressed automatically. These samples may contain undetectable impulse noise energy.

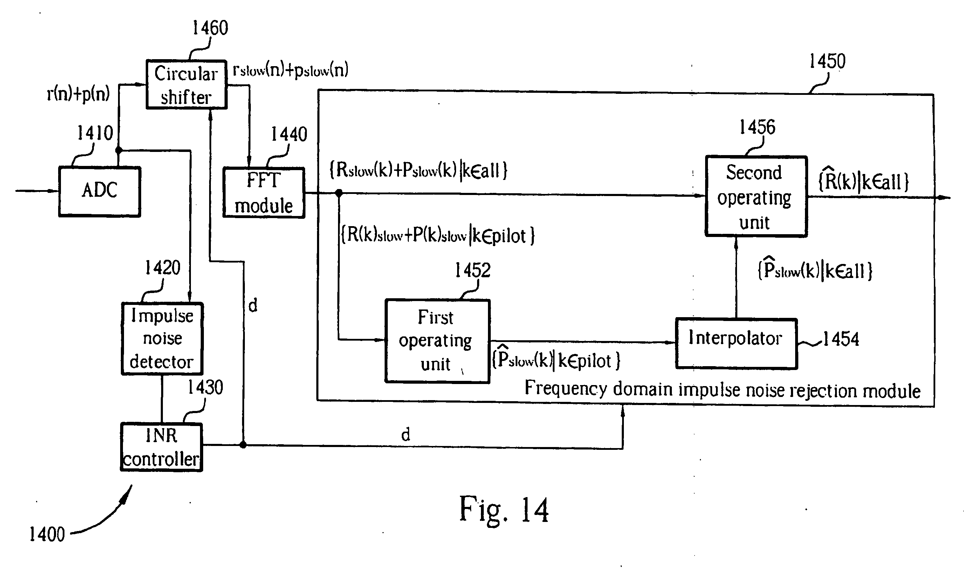

As mentioned above, one of the main contributions and advances introduced by the present invention is to down-convert the signals into a slow-varying waveform before interpolation such that the interpolation can be performed effectively in order to obtain estimated impulse noise free signals at all subcarriers. However, this effect can be achieved by circularly shifting samples in time domain in advance. Please refer to Fig. 14. Fig .14 is a block diagram of the third embodiment of the present invention impulse noise rejection system 1400. An impulse noise detector 1420 is coupled to an ADC 1410 for detecting presence of impulse noise in symbols output from the ADC 1410. When the presence of the impulse noise in the symbol is detected by the impulse noise detector 1420, the INR controller 1430 generates a descriptor d according to a position of an impulse noise in the symbol for optimal noise estimation. The algorithm that is utilized by the INR controller 1430 can be the same as the aforementioned examples described with Fig. 7 to Fig. 10. When the presence of impulse noise is detected by the impulse noise detector 1420, the samples output from the ADC 1410 are sent to a circular shifter 1460 before an FFT module 1440 performs fast Fourier transformation on them. The circular shifter 1460 is utilized to circularly shift samples of an OFDM symbol by a first distance according to the descriptor d generated by the INR controller 1430 such that the center of the impulse duration is located at the first sample of the OFDM symbol, wherein the first distance is decided according to the descriptor d. This circularly shifted signal is denoted as follows:

$$r_{slow}(n) + p_{slow}(n) \qquad\qquad (11)$$

The circular shifted signal is further sent to the FFT module 1440 to obtain:

$$R_{slow}(k) + P_{slow}(k) \qquad\qquad (12)$$

FFT of the circularly shifted signal at pilot subcarriers is sent into a frequency domain impulse noise rejection module 1450. The first operating unit 1452 of the frequency domain impulse noise rejection module 1450 processes input circularly shifted signals at pilot subcarriers in order to obtain estimated impulse noise at pilot subcarriers in a slow-varying waveform $\{\hat{P}slow(k)|k \in pilot\ subcarriers\}$ according to predicted pilot subcarriers $\hat{R}(k)|k \in \{pilot\ subcarriers\}$ and the descriptor d generated by the INR controller 1430. An interpolator 1454 coupled to the first operating unit 1452 is capable of interpolating the estimated impulse noise at the pilot subcarriers in the slow-varying waveform for obtaining estimated impulse noise at all subcarriers of the OFDM communications system in the slow-varying waveform:

$$\{\hat{P}_{slow}(k) \mid k \in pilot\ subcarriers\} \quad \overset{Interpolation}{\Longrightarrow} \quad \{\hat{P}_{slow}(k) \mid k \in all\ subcarriers\}$$

A second operating unit 1456 is coupled to the FFT module 1440 and the interpolator 1454 for generating estimated impulse noise free signals at all subcarriers in a fast-varying waveform according to the signals from the FFT module and the estimated impulse noise at all subcarriers of the OFDM communications system in the slow-varying waveform and the descriptor. Therefore, an impulse noise rejection system and related method that circularly shifts samples in time domain in advance is achieved.

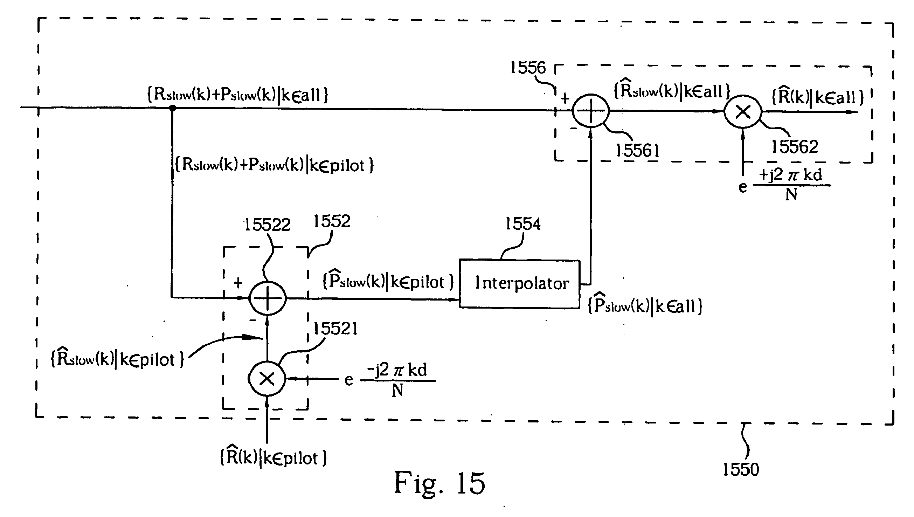

To implement the frequency domain impulse noise rejection module of the third embodiment of the present invention impulse noise rejection system, there can be various structures of the frequency domain impulse noise rejection module as long as the first operating unit can generate estimated impulse noise at pilot subcarriers in a slow-varying waveform according to the predicted pilot subcarriers of the OFDM communications system and the signals received from the FFT module, and the second operating unit can generate estimated impulse noise free signals at all subcarriers in a fast-varying waveform according to the estimated impulse noise at all subcarriers of the OFDM communications system in the slow-varying waveform. Please refer to Fig. 15. Fig. 15 is a block diagram of the third embodiment of the present invention frequency domain impulse noise rejection module 1550. The first operating unit 1552 of the frequency domain impulse noise rejection module 1550 includes a converter 15521 and a subtracter 15522. The converter 15521 is utilized to down-convert the predicted pilot subcarriers $\hat{R}(k)|k \in \{pilot\ subcarriers\}$ into a slow-varying waveform according to the descriptor d generated by the INR controller of the system:

$$\hat{R}_{slow}(k) \mid \hat{R}(k) \cdot e^{-jk2\pi kd/N}, \{k \in pilot\ subcarriers\} \tag{13}$$

The predicted pilot subcarriers in the slow-varying waveform is further subtracted from the received signals at pilot subcarriers by the subtractor 15522 in order to obtain the estimated impulse noise at pilot subcarriers in the slow-varying waveform:

$$\hat{P}_{slow}(k) \mid R_{slow}(k) + P_{slow}(k) - \hat{R}_{slow}(k), k \in \{pilot\ subcarriers\} \tag{14}$$

The interpolator 1554 interpolates the estimated impulse noise at pilot subcarriers in the slow-varying waveform into the estimated impulse noise at all subcarriers in the slow-varying waveform:

$$\{\hat{P}_{slow}(k) \mid k \in pilot\ subcarriers\} \quad \overset{Interpolation}{\Longrightarrow} \quad \{\hat{P}_{slow}(k) \mid k \in all\ subcarriers\}$$

The second operating unit 1556 includes a subtracter 15561 and a converter 15562. The subtracter 15561 subtracts the estimated impulse noise at all subcarriers in the slow-varying waveform $\{\hat{P}_{slow}(k)|k \in all\ subcarriers\}$ from the input signals in order to obtain estimated impulse noise free signals at all subcarriers in a slow-varying waveform:

$$\hat{R}_{slow}(k) \mid R_{slow}(k) + P_{slow}(k) - \hat{P}_{slow}(k), k \in \{all\ subcarriers\} \tag{15}$$

Afterwards, the converter 15562 up converts the estimated impulse noise free signals at all subcarriers in the slow-varying waveform into the estimated impulse noise at all subcarriers in the fast-varying waveform according to the same descriptor d:

$$\{\hat{R}(k)\,|\,\hat{R}_{slow}(k)\cdot e^{+jk2\pi n_c/N}\,,\,k\in all\ subcarriers\} \qquad\qquad (16)$$

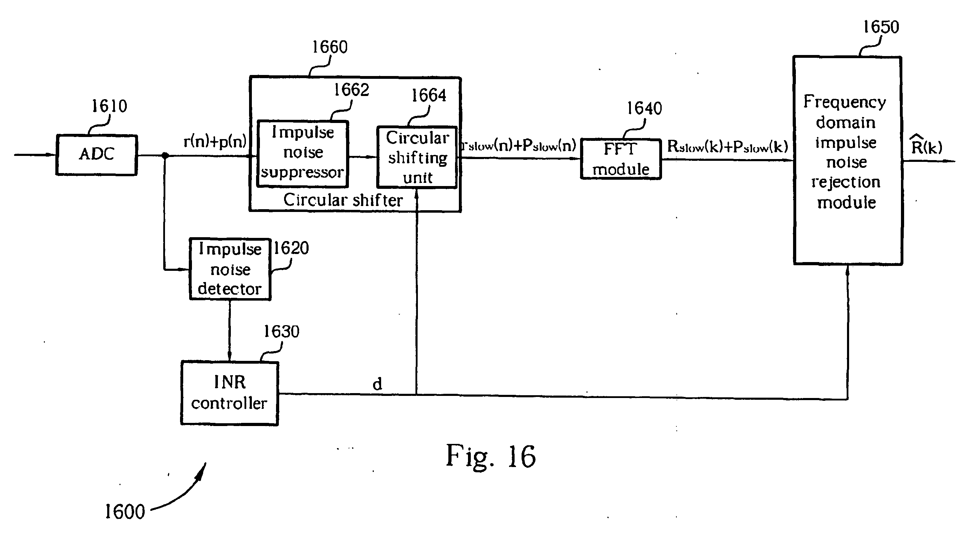

The aforementioned impulse noise suppressor can be included in the present invention impulse noise rejection system along with the circular shifter. Please refer to Fig. 16. Fig. 16 is a block diagram of the fourth embodiment of the present invention impulse noise rejection system 1600. An impulse noise suppressor 1662 is included in the circular shifter 1660. The structure and function of the impulse noise suppressor is the same as the impulse noise suppressor 1320 shown in Fig. 13. Samples output from the ADC 1610 are sent into the impulse noise suppressor 1662. The impulse noise suppressor 1662 is capable of replacing samples by substitute samples while an impulse noise event is detected by the impulse noise detector 1620, such that the adverse effect caused by the high energy of impulse noise can be reduced in advance. The function and device of circularly shifting samples is represented by a circular shifting unit 1664 coupled to the impulse noise suppressor 1662 within the circular shifter 1660 in Fig. 16.

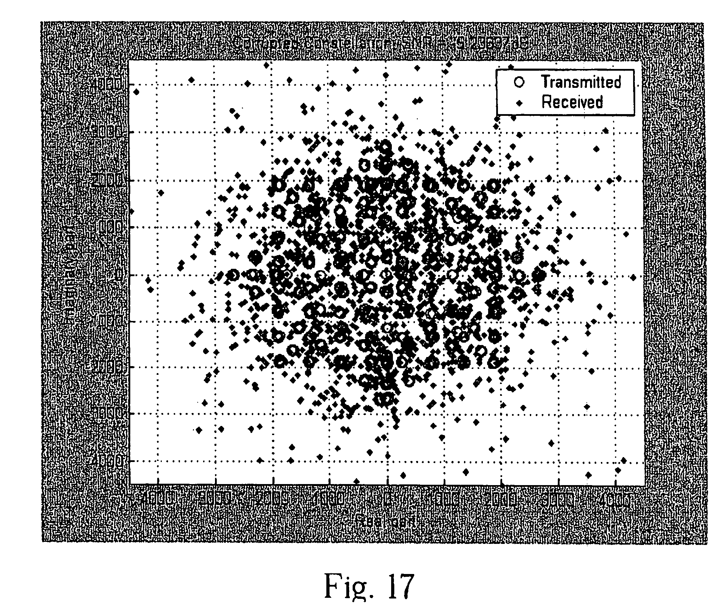

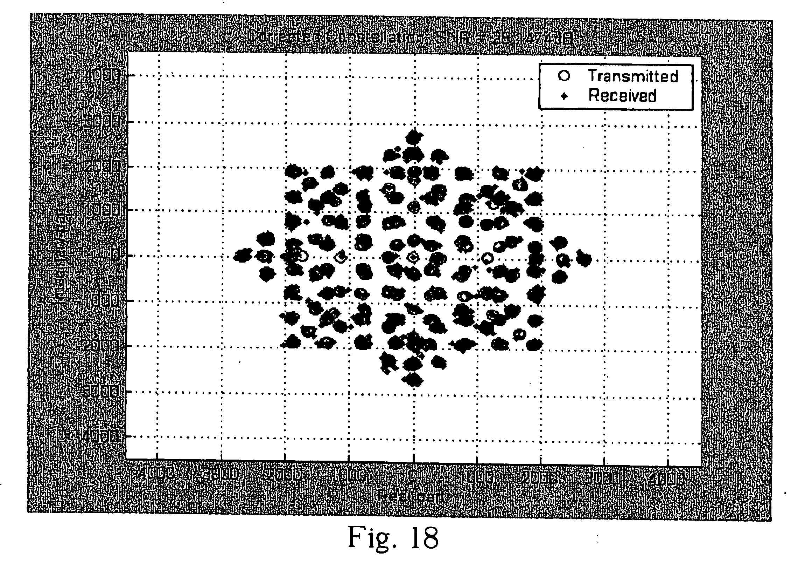

The performance of the present invention impulse noise rejection system for an OFDM communications system and related method is demonstrated by experiment. Please refer to Fig. 17 and Fig. 18. Fig. 17 is the constellation diagram of signals without impulse noise rejection, and Fig. 18 is the constellation diagram of signals with the present invention impulse noise rejection when the SNR of the received base-band signal (DVB-T 2K mode 64 QAM) is 30dB and 20 samples are corrupted by impulse noise. It is obvious that the claimed invention successfully rejects effects of impulse noise and improves performance of the receiver.

This present invention discloses a pilot-based impulse noise rejection method and apparatus for use in OFDM communications systems. In the receiver, impulse noise is detected and suppressed in time domain, and is compensated in frequency domain. In the present invention frequency domain impulse noise rejection module, impulse noise is first estimated at the pilot subcarriers, and then converted to a slow-varying waveform. An interpolator is utilized to estimate the impulse noise at non-pilot subcarriers. The interpolated waveform is used for impulse noise cancellation. The system has low implementation complexity and low power consumption. The system is operable in real time to reject impulse noise.

## Claims

1.  An impulse noise rejection system for an orthogonal frequency division multiplexing (OFDM) communications system, the impulse noise rejection system comprising:

    an impulse noise detector (320, 620, 1100) coupled to an input of the impulse noise rejection system for detecting presence of impulse noise in an input symbol of the impulse noise rejection system; and
    a fast Fourier transform (FFT) module (340, 640, 1300) coupled to the input of the impulse noise rejection system for generating FFT of symbols; and
    a frequency domain impulse noise rejection module (350, 450, 550, 650);
    **characterized in that** the frequency domain impulse noise rejection module (350, 450, 550, 650) comprises:

    a first operating unit (352, 452, 552), comprising a subtracter (4521) coupled to the FFT module (340, 640, 1300) for subtracting predicted pilot subcarriers of the OFDM communications system from signals received from the FFT module (340, 640, 1300) at pilot subcarriers in order to generate estimated impulse noise at pilot subcarriers; and a converter (4522) coupled to the subtracter (4521) for down-converting the estimated impulse noise at pilot subcarriers into a slow-varying waveform according to a descriptor for providing an appropriate frequency for down-converting the estimated impulse noise at pilot subcarriers;
    an interpolator (354, 454, 554) coupled to the first operating unit (352, 452, 552) for interpolating the estimated impulse noise at the pilot subcarriers in the slow-varying waveform in order to obtain estimated impulse noise at all subcarriers of the OFDM communications system in the slow-varying waveform; and
    a second operating unit (356, 456, 556), comprising a converter (4561) coupled to the interpolator (454) for up-converting the estimated impulse noise at all subcarriers in the slow-varying waveform into the fast-varying waveform according to the descriptor; and a subtracter (4562) coupled to the FFT module (340, 640, 1300) for subtracting the estimated impulse noise at all subcarriers in the fast-varying waveform from the signals received from the FFT module (340, 640, 1300) at all subcarriers in order to obtain the estimated impulse noise free signal at all subcarriers.

2. The impulse noise rejection system of claim 1 **characterized in that** the first operating unit (352, 552) comprises:

a first converter (5521) coupled to the FFT module (340, 640, 1300) for down-converting signals into a slow-varying waveform;

a second converter (5523) for down-converting the estimated impulse noise at pilot subcarriers into the slow-varying waveform according to the descriptor; and

a subtracter (5522) coupled to the first converter (5521) and the second converter (5523) for subtracting the predicted pilot subcarriers of the OFDM communications system in the slow-varying waveform from the signals down converted by the first converter (5521) in order to obtain the estimated impulse noise at pilot subcarriers in a slow-varying waveform.

3. The impulse noise rejection system of claim 1 **characterized in that** the second operating unit (356, 556) comprises:

a subtracter (5561) coupled to the interpolator (354, 554) for subtracting the estimated impulse noise at all subcarriers in the fast-varying waveform from the signals received from the FFT module (340, 640, 1300) at all subcarriers down-converted into the slow-varying waveform in order to obtain the estimated impulse noise free signal at all subcarriers in the slow-varying waveform; and

a converter (5562) coupled to the subtracter (5561) of the second operating unit (356, 556) for up-converting the estimated impulse noise at all subcarriers in the slow-varying waveform into the fast-varying waveform according to the descriptor.

4. The impulse noise rejection system of claim 1 **characterized in that** the impulse noise rejection system further comprises:

an impulse noise rejection (INR) controller (630) coupled to the impulse noise detector (620, 1100) and the frequency domain impulse noise rejection module (650) for generating the descriptor according to positions of impulse noise events in a symbol when presence of the impulse noise in the symbol is detected by the impulse noise detector (620, 1100).

5. The impulse noise rejection system of claim 1 **characterized in that** the impulse noise detector (620, 1100) comprises:

an absolute value evaluator (1120) coupled to the input of the impulse noise rejection system for calculating an absolute value of a sample of the symbol;

a saturation detector (1140, 1200) coupled to the absolute value evaluator (1120) for generating a first value when the input absolute value is greater than a threshold, and generating a second value when the input absolute value is not greater than the threshold;

a buffer (1160) coupled to the saturation detector (1140, 1200) for buffering values from the saturation detector (1140, 1200); and

a saturation calculator (1180) coupled to the buffer (1160) for calculating a sum of Q successive values generated by the saturation detector (1140, 1200).

6. The impulse noise rejection system of claim 5 **characterized in that** the threshold is predetermined.

7. The impulse noise rejection system of claim 5 **characterized in that** the threshold is corresponding to an envelope of the input absolute value of the saturation detector (1140, 1200).

8. The impulse noise rejection system of claim 1 **characterized in that** the FFT module (1300) comprises an impulse noise suppressor (1320) coupled to the input of the impulse noise rejection system and the impulse noise detector (320, 620, 1100) for buffering input samples of the impulse noise rejection system, outputting buffered samples when presence of impulse noise is not detected by the impulse noise detector (320, 620, 1100), and outputting a set of substitute samples instead of the buffered samples when presence of impulse noise is detected by the impulse noise detector (320, 620, 1100).

9. The impulse noise rejection system of claim 8 **characterized in that** the impulse noise suppressor (1320) comprises:

a buffer (1322) for buffering input samples;

a substitute sample generator (1324) for generating substitute samples according to a predetermined rule when presence of impulse noise is detected by the impulse noise detector (320, 620, 1100); and

a multiplexer (1326) coupled to the buffer (!322) and the substitute sample generator (1324) for outputting samples from the buffer (1322) when presence of impulse noise is not detected by the impulse noise detector (320, 620, 1100), and outputting substitute samples from the substitute sample generator (1324) when presence of impulse noise is detected by the impulse noise detector (320, 620, 1100).

10. The impulse noise rejection system of claim 1 **characterized in that** the impulse noise rejection system is coupled to a demodulator for the OFDM communications system for outputting the estimated impulse noise free signal at all subcarriers generated by the frequency domain impulse noise rejection module (350, 450, 550, 650) to the demodulator for further processing.

11. An impulse noise rejection system (1400, 1600) for an orthogonal frequency division multiplexing (OFDM) communications system, the impulse noise rejection system (1400, 1600) comprising:

an impulse noise detector (1100, 1420, 1620) coupled to the input of the impulse noise rejection system (1400, 1600) for detecting presence of impulse noise in an input symbol of the impulse noise rejection system (1400, 1600);

a circular shifter (1460, 1660) coupled to the input of the impulse noise rejection system (1400, 1600) for circularly shifting samples of a symbol by a first distance when presence of impulse noise in the symbol is detected by the impulse noise detector (1100, 1420, 1620);

a fast Fourier transform (FFT) module (1300, 1440, 1640) coupled to the circular shifter (1460, 1660) for generating FFT of symbols; and

a frequency domain impulse noise rejection module (1450, 1550, 1650);

**characterized in that** the frequency domain impulse noise rejection module (1450, 1550, 1650) comprises:

a first operating unit (1452, 1552), comprising a converter (15521) for down-converting predicted pilot subcarriers of the OFDM communications system into a slow-varying waveform according to a descriptor for providing an appropriate frequency for down-converting the estimated impulse noise at pilot subcarriers; and a subtracter (15522) coupled to the FFT module (1300, 1440, 1640) and the interpolator (1454, 1554) for subtracting the down-converted predicted pilot subcarriers of the OFDM communications system in the slow-varying waveform from signals received from the FFT module (1300, 1440, 1640) at pilot subcarriers in order to generate estimated impulse noise at pilot subcarriers in the slow-varying waveform;

an interpolator (1454, 1554) coupled to the first operating unit (1452, 1552) for interpolating the estimated impulse noise at the pilot subcarriers in the slow-varying waveform in order to obtain estimated impulse noise at all subcarriers of the OFDM communications system in the slow-varying waveform; and

a second operating unit (1456, 1556), comprising a subtracter (15561) coupled to the FFT module (1300, 1440, 1640) for subtracting the estimated impulse noise at all subcarriers in the slow-varying waveform from the signals received from the FFT module (1300, 1440, 1640) at all subcarriers in order to obtain the estimated impulse noise free signal at all subcarriers in the slow-varying form; and a converter (15562) coupled to the subtracter (15561) for up-converting the estimated impulse noise free signal at all subcarriers in the slow-varying form into the fast-varying waveform according to the descriptor.

12. The impulse noise rejection system (1400, 1600) of claim 11 **characterized in that** the impulse noise rejection system (1400, 1600) further comprises:

an impulse noise rejection (INR) controller (630, 1430, 1630) coupled to the impulse noise detector (1100, 1420, 1620) and the frequency domain impulse noise rejection module (1450, 1550, 1650) for generating the descriptor according to positions of impulse noise events in a symbol when presence of the impulse noise in the symbol is detected by the impulse noise detector (1100, 1420, 1620).

13. The impulse noise rejection system (1400, 1600) of claim 11 **characterized in that** the first distance is decided according to the descriptor.

14. The impulse noise rejection system (1400, 1600) of claim 11 **characterized in that** the samples of the symbol are circularly shifted by the circular shifter (1460, 1660) such that the center of duration of impulse noise of the symbol is located at the most preceding sample of the symbol.

**15.** The impulse noise rejection system (1400, 1600) of claim 11 **characterized in that** the impulse noise detector (1100, 1420, 1620) comprises:

an absolute value evaluator (1120) coupled to the input of the impulse noise rejection system (1400, 1600) for calculating an absolute value of a sample of the symbol;

a saturation detector (1140, 1200) coupled to the absolute value evaluator (1120) for generating a first value when the input absolute value is greater than a threshold, and generating a second value when the input absolute value is not greater than the threshold;

a buffer (1160) coupled to the saturation detector (1140, 1200) for buffering values from the saturation detector (1140, 1200); and

a saturation calculator (1180) coupled to the buffer (1160) for calculating a sum of Q successive values generated by the saturation detector (1140, 1200).

**16.** The impulse noise rejection system (1400, 1600) of claim 15 **characterized in that** the threshold is predetermined.

**17.** The impulse noise rejection system of claim 15 **characterized in that** the threshold is corresponding to an envelope of the input absolute value of the saturation detector.

**18.** The impulse noise rejection system (1400, 1600) of claim 11 **characterized in that** the circular shifter (1460, 1660) comprises an impulse noise suppressor (1662) coupled to the input of the impulse noise rejection system (1400, 1600) and the impulse noise detector (1100, 1420, 1620) for buffering input samples of the impulse noise rejection system (1400, 1600), outputting buffered samples when presence of impulse noise is not detected by the impulse noise detector (1100, 1420, 1620), and outputting a set of substitute samples instead of the buffered samples when presence of impulse noise is detected by the impulse noise detector (1100, 1420, 1620).

**19.** The impulse noise rejection system (1400, 1600) of claim 18 **characterized in that** the impulse noise suppressor (1662) comprises:

a buffer for buffering input samples;

a substitute sample generator for generating substitute samples according to a predetermined rule when presence of impulse noise is detected by the impulse noise detector; and

a multiplexer coupled to the buffer and the substitute sample generator for outputting samples from the buffer when presence of impulse noise is not detected by the impulse noise detector, and outputting substitute samples from the substitute sample generator when presence of impulse noise is detected by the impulse noise detector.

**20.** The impulse noise rejection system (1400, 1600) of claim 11 **characterized in that** the impulse noise rejection system (1400, 1600) is further coupled to a demodulator for the OFDM communications system for outputting the estimated impulse noise free signal at all subcarriers generated by the frequency domain impulse noise rejection module (1450, 1550, 1650) to the demodulator for further processing.

**21.** A method for rejecting impulse noise in a symbol of an orthogonal frequency division multiplexing (OFDM) communications system, the method comprising:

(a) detecting presence of impulse noise in a symbol of the OFDM communications system;

(b) generating fast Fourier transform (FFT) of a symbol of the OFDM communications system;

**characterized in that** the method further comprises:

(c1) subtracting predicted pilot subcarriers of the OFDM communications system from FFTs of symbols of the OFDM communications system generated in step (b) at pilot subcarriers in order to generate estimated impulse noise at pilot subcarriers; and

(c2) down-converting the estimated impulse noise at pilot subcarriers into a slow-varying waveform according to a descriptor for providing an appropriate frequency for down-converting the estimated impulse noise at pilot subcarriers;

(d) interpolating the estimated impulse noise at the pilot subcarriers in the slow-varying waveform in order to obtain estimated impulse noise at all subcarriers of the OFDM communications system in the slow-varying waveform; and

(e1) up-converting the estimated impulse noise at all subcarriers in the slow-varying waveform into the fast-varying waveform according to the descriptor; and

(e2) subtracting the estimated impulse noise at all subcarriers in the fast-varying waveform from the FFTs of symbols of the OFDM communications system at all subcarriers in order to obtain the estimated impulse noise free signal at all subcarriers.

**22.** The method of claim 21 **characterized in that** the method further comprises:

(f) generating the descriptor d according to positions of impulse noise events in a symbol when presence of the impulse noise in the symbol is detected.

**23.** The method of claim 22 **characterized in that** a symbol of the OFDM communications system contains N samples; wherein step (f) further comprises:

(g) when there is one impulse event in the symbol, utilizing a descriptor Ns to represent a start position of the impulse event and a descriptor Ne to represent an end position of the impulse event; and
(h) setting the descriptor d as (Ns+Ne)/2.

**24.** The method of claim 22 **characterized in that** a symbol of the OFDM communications system contains N samples; wherein step (f) further comprises:

(g) when there are a plurality of impulse events in the symbol and a number of samples between a first impulse event and a second impulse event is larger than N/2, in which the first impulse is preceding to the second impulse event, utilizing a descriptor Ns to represent a start position of the second impulse event and a descriptor Ne to represent an end position of the first impulse event; and
(h) setting the descriptor d as (Ns+Ne)/2.

**25.** The method of claim 22 **characterized in that** a symbol of the OFDM communications system contains N samples; wherein step (f) further comprises:

(g) when there are a plurality of impulse events in the symbol and a number of samples between every two adjacent impulse events are not larger than N/2, utilizing a descriptor Ns to represent a start position of a first impulse event and a descriptor Ne to represent an end position of a second impulse event, in which the first impulse event is adjacent to the second impulse event; and
(h) setting the descriptor d as (Ns+Ne)/2.

**26.** The method of claim 21 **characterized in that** step (a) comprises:

determining the presence of impulse noise in the symbol of the OFDM communications system when absolute values of P samples of Q successive samples in the symbol are greater than a threshold.

**27.** The method of claim 26 **characterized in that** step (a) comprises:

(f) evaluating an absolute value of a sample of the symbol;
(g) generating a first value when the absolute value is greater than the threshold;
(h) calculating a sum of Q successive values, wherein each of the Q successive values represents a saturation status of a sample of the symbol; and
(i) determining the presence of impulse noise in the symbol of the OFDM communications system when the sum calculated in step (h) conforms to a predetermined rule.

**28.** The method of claim 26 **characterized in that** step (a) comprises:

(f) evaluating an absolute value of a sample of the symbol;
(g) generating a second value when the input absolute value is not greater than the threshold;
(h) calculating a sum of Q successive values, wherein each of the Q successive values represents a saturation status of a sample of the symbol; and
(i) determining the presence of impulse noise in the symbol of the OFDM communications system when the sum calculated in step (h) conforms to a predetermined rule.

**29.** The method of claim 21 **characterized in that** the method further comprises:

(f) buffering samples of the symbol of the OFDM communications system; and
(g) generating substitute samples according to a predetermined rule when presence of impulse noise is detected;

wherein step (b) generates FFT of the substitute samples when presence of impulse noise is detected.

**30.** The method of claim 21 **characterized in that** the method further comprises:

(f) circularly shifting samples of a symbol by a first distance when presence of impulse noise in the symbol is detected;

wherein step (b) generates FFT of the symbol of which the samples are circularly shifted in step (f).

**31.** The method of claim 30 **characterized in that** step (c) comprises:

(g) down-converting the predicted pilot subcarriers of the OFDM communications system into the slow-varying waveform according to the descriptor; and
(h) subtracting the predicted pilot subcarriers of the OFDM communications system in the slow-varying waveform from the FFTs of symbols of the OFDM communications system at pilot subcarriers in order to generate estimated impulse noise at pilot subcarriers in the slow-varying waveform.

**32.** The method of claim 30 **characterized in that** step (e) comprises:

(g) subtracting the estimated impulse noise at pilot subcarriers in the slow-varying waveform from the FFTs of symbols of the OFDM communications system at all subcarriers in order to obtain the estimated impulse noise free signal at all subcarriers in the slow-varying waveform; and
(h) up-converting the estimated impulse noise free signal at all subcarriers in the slow-varying waveform into the fast-varying waveform according to the descriptor.

**33.** The method of claim 30 **characterized in that** the method further comprises:

(g) deciding the first distance according to the descriptor.

**34.** The method of claim 30 **characterized in that** the first distance is a predetermined distance.

**Patentansprüche**

**1.** Impulsstörungen-Unterdrückungssystem für ein Orthogonal Frequency Division Multiplexing(OFDM)-Kommunikationssystem, wobei das Impulsstörungen-Unterdrückungssystem umfasst:

einen Impulsstörungsdetektor (320, 620, 1100), der mit einem Eingang des Impulsstörungen-Unterdrückungssystems gekoppelt ist, um das Vorhandensein von Impulsstörungen in einem Eingangssymbol des Impulsstörungen-Unterdrückungssystems zu erfassen; und
ein Schnelle-Fourier-Transformation(FFT)-Modul (340, 640, 1300), das mit dem Eingang des Impulsstörungen-Unterdrückungssystems gekoppelt ist, um FFT von Symbolen zu erzeugen; und
ein Frequenzbereich-Impulsstörungen-Unterdrückungsmodul (350, 450, 550, 650);
**dadurch gekennzeichnet, dass** das Frequenzbereich-Impulsstörungen-Unterdrückungsmodul (350, 450, 550, 650) umfasst:

eine erste Betriebseinheit (352, 452, 552), die eine Subtrahiereinrichtung (4521) umfasst, die mit dem FFT-Modul (340, 640, 1300) gekoppelt ist, um vorhergesagte Pilothilfsträger des OFDM-Kommunikationssystems von von dem FFT-Modul(340, 640, 1300) bei Pilothilfsträgern empfangenen Signalen zu subtrahieren, um geschätzte Impulsstörungen bei Pilothilfsträgern zu erzeugen; und einen Wandler (4522), der mit der Subtrahiereinrichtung (4521) gekoppelt ist, um die geschätzten Impulsstörungen bei Pilothilfsträgern entsprechend einem Deskriptor zu einer langsam sich verändernden Wellenform abwärts zu wandeln, um eine geeignete Frequenz zum Abwärtswandeln der geschätzten Impulsstörungen bei Pilothilfsträgern zur Verfügung zu stellen;
einen Interpolator (354, 454, 554), der mit der ersten Betriebseinheit (352, 452, 552) gekoppelt ist, um die geschätzten Impulsstörungen bei den Pilothilfsträgern in der langsam sich verändernde Wellenform zu interpolieren, um geschätzte Impulsstörungen bei allen Hilfsträgern des OFDM-Kommunikationssystems in der langsam sich verändernden Wellenform zu erlangen; und

eine zweite Betriebseinheit (356, 456, 556), die einen Wandler (4561) umfasst, der mit dem Interpolator (454) gekoppelt ist, um die geschätzten Impulsstörungen bei allen Hilfsträgern in der langsam sich verändernden Wellenform gemäß dem Deskriptor zu der schnell sich ändernde Wellenform aufwärts zu wandeln; und eine Subtrahiereinrichtung (4562), die mit dem FFT-Modul (340, 640, 1300) gekoppelt ist, um die geschätzten Impulsstörungen bei allen Hilfsträgern in der schnell sich verändernden Wellenform von den von dem FFT-Modul (340, 640, 1300) empfangenen Signalen bei allen Hilfsträgern zu subtrahieren, um das geschätzte, impulsstörungsfreie Signal bei allen Hilfsträgern zu erlangen.

2. Impulsstörungen-Unterdrückungssystem gemäß Anspruch 1, **dadurch gekennzeichnet, dass** die erste Betriebseinheit (352, 552) umfasst:

einen ersten Wandler (5521), der mit dem FFT-Modul (340, 640, 1300) gekoppelt ist, um Signale zu einer langsam sich verändernden Wellenform abwärts zu wandeln;

einen zweiten Wandler (5523) zum Abwärtswandeln der geschätzten Impulsstörungen bei Pilothilfsträgern gemäß dem Deskriptor zu der langsam sich verändernde Wellenform; und

eine Subtrahiereinrichtung (5522), die mit dem ersten Wandler (5521) und dem zweiten Wandler (5523) gekoppelt ist, um die vorhergesagten Pilothilfsträger des OFDM-Kommunikationssystems in der langsam sich verändernden Wellenform von den durch den ersten Wandler (5521) abwärts gewandelten Signalen zu subtrahieren, um die geschätzten Impulsstörungen bei Pilothilfsträgern in einer langsam sich verändernden Wellenform zu erlangen.

3. Impulsstörungen-Unterdrückungssystem gemäß Anspruch 1, **dadurch gekennzeichnet, dass** die zweite Betriebseinheit (356, 556) umfasst:

eine Subtrahiereinrichtung (5561), die mit dem Interpolator (354, 554) gekoppelt ist, um die geschätzten Impulsstörungen bei allen Hilfsträgern in der schnell sich verändernden Wellenform von den von dem FFT-Modul (340, 640, 1300) bei allen Hilfsträgern, die in die langsam sich verändernde Wellenform abwärts gewandelt sind, empfangenen Signalen zu subtrahieren, um das geschätzte, impulsstörungsfreie Signal bei allen Hilfsträgern in der langsam sich verändernden Wellenform zu erlangen; und

einen Wandler (5562), der mit der Subtrahiereinrichtung (5561) der zweite Betriebseinheit (356, 556) gekoppelt ist, um die geschätzten Impulsstörungen bei allen Hilfsträgern in der langsam sich verändernden Wellenform gemäß dem Deskriptor zu der schnell sich verändernde Wellenform aufwärts zu wandeln.

4. Impulsstörungen-Unterdrückungssystem gemäß Anspruch 1, **dadurch gekennzeichnet, dass** das Impulsstörungen-Unterdrückungssystem ferner umfasst:

eine Impulsstörungenunterdrückung (Impulse Noise Rejection)(INR)-Steuerungseinrichtung (630), die mit dem Impulsstörungsdetektor (620, 1100) und dem Frequenzbereich-Impulsstörungen-Unterdrückungsmodul (650) gekoppelt ist, um den Deskriptor entsprechend Positionen von Impulsstörungsereignissen in einem Symbol zu erzeugen, wenn das Vorhandensein der Impulsstörungen in dem Symbol durch den Impulsstörungsdetektor (620, 1100) festgestellt ist.

5. Impulsstörungen-Unterdrückungssystem gemäß Anspruch 1, **dadurch gekennzeichnet, dass** der Impulsstörungsdetektor (620, 1100) umfasst:

eine Absolutwert-Bestimmungseinrichtung (1120), die mit dem Eingang des Impulsstörungen-Unterdrückungssystems gekoppelt ist, um einen Absolutwert eines Abtastwertes des Symbols zu berechnen;

einen Sättigungsdetektor (1140, 1200), der mit der Absolutwert-Bestimmungseinrichtung (1120) gekoppelt ist, um einen ersten Wert zu erzeugen, wenn der Eingangsabsolutwert größer als ein Schwellenwert ist, und um einen zweiten Wert zu erzeugen, wenn der Eingangsabsolutwert nicht größer als der Schwellenwert ist;

einen Zwischenspeicher (1160), der mit dem Sättigungsdetektor (1140, 1200) zum Zwischenspeichern von Werten von dem Sättigungsdetektor (1140, 1200) gekoppelt ist; und

eine Sättigungsberechnungseinrichtung (1180), die mit dem Zwischenspeicher (1160) gekoppelt ist, um eine Summe von Q aufeinander folgenden Werten, die von dem Sättigungsdetektor (1140, 1200) erzeugt werden, zu berechnen.

**6.** Impulsstörungen-Unterdrückungssystem gemäß Anspruch 5 **dadurch gekennzeichnet, dass** der Schwellenwert vorbestimmt ist.

**7.** Impulsstörungen-Unterdrückungssystem gemäß Anspruch 5, **dadurch gekennzeichnet, dass** der Schwellenwert einer Hüllkurve des Eingangsabsolutwertes des Sättigungsdetektors (1140, 1200) entspricht.

**8.** Impulsstörungen-Unterdrückungssystem gemäß Anspruch 1, **dadurch gekennzeichnet, dass** das FFT-Modul (1300) eine Impulsstörungen-Unterdrückungseinrichtung (1320) umfasst, die mit dem Eingang des Impulsstörungen-Unterdrückungssystems und dem Impulsstörungsdetektor (320, 620, 1100) gekoppelt ist, um Eingangsabtastwerte des Impulsstörungen-Unterdrückungssystems zwischenzuspeichern, die zwischengespeicherten Abtastwerte auszugeben, wenn das Vorhandensein von Impulsstörungen von dem Impulsstörungsdetektor (320, 620, 1100) nicht festgestellt ist, und einen Satz von Ersatzabtastwerten an Stelle der zwischengespeicherten Abtastwerte auszugeben, wenn das Vorhandensein von Impulsstörungen von dem Impulsstörungsdetektor (320, 620, 1100) festgestellt ist.

**9.** Impulsstörungen-Unterdrückungssystem gemäß Anspruch 8, **dadurch gekennzeichnet, dass** die Impulsstörungen-Unterdrückungseinrichtung (1320) umfasst:

einen Zwischenspeicher (1322) zum Zwischenspeichern von Eingangsabtastwerten;
einen Ersatzabtastwerterzeuger (1324) zum Erzeugen von Ersatzabtastwerten gemäß einer vorbestimmten Vorschrift, wenn das Vorhandensein von Impulsstörungen von dem Impulsstörungsdetektor (320, 620, 1100) festgestellt ist; und
einen Multiplexer (1326), der mit dem Zwischenspeicher (1322) und dem Ersatzabtastwerterzeuger (1324) gekoppelt ist, um Abtastwerte aus dem Zwischenspeicher (1322) auszugeben, wenn das Vorhandensein von Impulsstörungen von dem Impulsstörungsdetektor (320, 620, 1100) nicht festgestellt ist, und um Ersatzabtastwerte von dem Ersatzabtastwerterzeuger (1324) auszugeben, wenn das Vorhandensein von Impulsstörungen von dem Impulsstörungsdetektor (320, 620, 1100) festgestellt ist.

**10.** Impulsstörungen-Unterdrückungssystem gemäß Anspruch 1, **dadurch gekennzeichnet, dass** das Impulsstörungen-Unterdrückungssystem mit einem Demodulator für das OFDM-Kommunikationssystem gekoppelt ist, um das geschätzte, impulsstörungsfreie Signal bei allen Hilfsträgern, das von dem Frequenzbereich-Impulsstörungen-Unterdrückungsmodul (350, 450, 550, 650) erzeugt worden ist, an den Demodulator zur weiteren Bearbeitung auszugeben.

**11.** Impulsstörungen-Unterdrückungssystem (1400, 1600) für ein Orthogonal Frequency Division Multiplexing(OFDM)-Kommunikationssystem, wobei das Impulsstörungen-Unterdrückungssystem (1400, 1600) umfasst:

einen Impulsstörungsdetektor (1100, 1420, 1620), der mit dem Eingang des Impulsstörungen-Unterdrückungssystems (1400, 1600) gekoppelt ist, um das Vorhandensein von Impulsstörungen in einem Eingangssymbol des Impulsstörungen-Unterdrückungssystems (1400, 1600) festzustellen;
einen Ringschifter (1460, 1660), der mit dem Eingang des Impulsstörungen-Unterdrückungssystems (1400, 1600) gekoppelt ist, um Abtastwerte eines Symbols um einen ersten Abstand ringförmig zu schiften, wenn das Vorhandensein von Impulsstörungen in dem Symbol durch den Impulsstörungsdetektor (1100, 1420, 1620) festgestellt ist;
ein Schnelle-Fourier-Transformation(FFT)-Modul (1300, 1440, 1640), das mit dem Ringschifter (1460, 1660) zum Erzeugen von FFT von Symbolen gekoppelt ist; und
ein Frequenzbereich-Impulsstörungen-Unterdrückungsmodul (1450, 1550, 1650);
**dadurch gekennzeichnet, dass** das Frequenzbereich-Impulsstörungen-Unterdrückungsmodul (1450, 1550, 1650) umfasst:

eine erste Betriebseinheit (1452, 1552), die einen Wandler (15521) umfasst, um die vorhergesagten Pilothilfsträger des OFDM-Kommunikationssystems gemäß einem Deskriptor zu einer langsam sich verändernden Wellenform abwärts zu wandeln, um eine geeignete Frequenz zum Abwärtswandeln der geschätzten Impulsstörungen bei Pilothilfsträgern zur Verfügung zu stellen; und eine Subtrahiereinrichtung (15522), die mit dem FFT-Modul (1300, 1440, 1640) und dem Interpolator (1454, 1554) gekoppelt ist, um die abwärts gewandelten, vorhergesagten Pilothilfsträger des OFDM-Kommunikationssystems in der langsam sich verändernden Wellenform von Signalen zu subtrahieren, die von dem FFT-Modul (1300, 1440, 1640) bei Pilothilfsträgern empfangen werden, um geschätzte Impulsstörungen bei Pilothilfsträgern in der langsam sich verändernden Wellenform zu erzeugen; einen Interpolator (1454, 1554), der mit der ersten Betriebseinheit (1452, 1552) gekoppelt ist, um die geschätzten Impulsstörungen bei den Pilothilfsträgern in der langsam sich verändernden Wellenform zu interpolieren, um geschätzte Impulsstörungen bei allen Hilfsträgern des OFDM-Kommunikationssystems in der langsam sich verändernden Wellenform zu erlangen; und

eine zweite Betriebseinheit (1456, 1556), die eine Subtrahiereinrichtung (15561) umfasst, die mit dem FFT-Modul (1300, 1440, 1640) gekoppelt ist, um die geschätzten Impulsstörungen bei allen Hilfsträgern in der langsam sich verändernden Wellenform von den von dem FFT-Modul (1300, 1440, 1640) bei allen Hilfsträgern empfangen Signalen zu subtrahieren, um das geschätzte, impulsstörungsfreie Signal bei allen Hilfsträgern in der langsam sich verändernden Wellenform zu erlangen; und einen Wandler (15562), der mit der Subtrahiereinrichtung (15561) gekoppelt ist, um das geschätzte, impulsstörungsfreie Signal bei allen Hilfsträgern in der langsam sich verändernden Wellenform gemäß dem Deskriptor zu der schnell sich verändernden Wellenform aufwärts zu wandeln.

12. Impulsstörungen-Unterdrückungssystem (1400, 1600) gemäß Anspruch 11, **dadurch gekennzeichnet, dass** das Impulsstörungen-Unterdrückungssystem (1400, 1600) ferner umfasst:

eine Impulsstörungenunterdrückung(INR)-Steuerungseinrichtung (630, 1430, 1630), die mit dem Impulsstörungsdetektor (1100, 1420, 1620) und dem Frequenzbereich-Impulsstörungen-Unterdrückungsmodul (1450, 1550, 1650) gekoppelt ist, um den Deskriptor gemäß Positionen von Impulsstörungsereignissen in einem Symbol zu erzeugen, wenn das Vorhandensein der Impulsstörungen in dem Symbol von dem Impulsstörungsdetektor (1100, 1420, 1620) festgestellt ist.

13. Impulsstörungen-Unterdrückungssystem (1400, 1600) gemäß Anspruch 11, **dadurch gekennzeichnet, dass** der erste Abstand gemäß dem Deskriptor bestimmt ist.

14. Impulsstörungen-Unterdrückungssystem (1400, 1600) gemäß Anspruch 11, **dadurch gekennzeichnet, dass** die Abtastwerte des Symbols durch den Ringschifter (1460, 1660) derart ringförmig geschiftet sind, dass das Zentrum der Dauer der Impulsstörungen des Symbols sich an dem vordersten Abtastwert des Symbols befindet.

15. Impulsstörungen-Unterdrückungssystem (1400, 1600) gemäß Anspruch 11, **dadurch gekennzeichnet, dass** der Impulsstörungsdetektor (1100, 1420, 1620) umfasst:

eine Absolutwert-Bestimmungseinrichtung (1120), die mit dem Eingang des Impulsstörungen-Unterdrückungssystems (1400, 1600) gekoppelt ist, um einen Absolutwert eines Abtastwertes des Symbols zu berechnen; einen Sättigungsdetektor (1140, 1200), der mit der Absolutwert-Bestimmungseinrichtung (1120) gekoppelt ist, um einen ersten Wert zu erzeugen, wenn der Eingangsabsolutwert größer als ein Schwellenwert ist, und einen zweiten Wert zu erzeugen, wenn der Eingangsabsolutwert nicht größer als der Schwellenwert ist; einen Zwischenspeicher (1160), der mit dem Sättigungsdetektor (1140, 1200) gekoppelt ist, um Werte von dem Sättigungsdetektor (1140, 1200) zwischenzuspeichern; und eine Sättigungsberechnungseinrichtung (1180), die mit dem Zwischenspeicher (1160) gekoppelt ist, um eine Summe von Q aufeinander folgenden Werten zu berechnen, die von dem Sättigungsdetektor (1140, 1200) erzeugt werden.

16. Impulsstörungen-Unterdrückungssystem (1400, 1600) gemäß Anspruch 15, **dadurch gekennzeichnet, dass** der Schwellenwert vorbestimmt ist.

17. Impulsstörungen-Unterdrückungssystem gemäß Anspruch 15, **dadurch gekennzeichnet, dass** der Schwellenwert einer Hüllkurve des Eingangsabsolutwertes des Sättigungsdetektors entspricht.

18. Impulsstörungen-Unterdrückungssystem (1400, 1600) gemäß Anspruch 11, **dadurch gekennzeichnet, dass** der Ringschifter (1460, 1660) eine Impulsstörungen-Unterdrückungseinrichtung (1662) umfasst, die mit dem Eingang des Impulsstörungen-Unterdrückungssystems (1400, 1600) und dem Impulsstörungsdetektor (1100, 1420, 1620) gekoppelt ist, um die Eingangsabtastwerte des Impulsstörungen-Unterdrückungssystems (1400, 1600) zwischenzuspeichern, um die zwischenspeicherten Abtastwerte auszugeben, wenn das Vorhandensein von Impulsstörungen von dem Impulsstörungsdetektor (1100, 1420, 1620) nicht festgestellt ist, und um einen Satz von Ersatzabtastwerten an Stelle der zwischenspeicherten Abtastwerte auszugeben, wenn das Vorhandensein von Impulsstörungen von dem·Impulsstörungsdetektor (1100, 1420, 1620) festgestellt ist.

19. Impulsstörungen-Unterdrückungssystem (1400, 1600) gemäß Anspruch 18, **dadurch gekennzeichnet, dass** die Impulsstörungen-Unterdrückungseinrichtung (1662) umfasst:

einen Zwischenspeicher zum Zwischenspeichern von Eingangsabtastwerten;
einen Ersatzabtastwerterzeuger zum Erzeugen von Ersatzabtastwerten gemäß einer vorbestimmten Vorschrift, wenn das Vorhandensein von Impulsstörungen durch den Impulsstörungsdetektor festgestellt ist; und
einen Multiplexer, der mit dem Zwischenspeicher und dem Ersatzabtastwerterzeuger gekoppelt ist, um Abtastwerte von dem Zwischenspeicher auszugeben, wenn das Vorhandensein von Impulsstörungen durch den Impulsstörungsdetektor nicht festgestellt ist, und um Ersatzabtastwerte von dem Ersatzabtastwerterzeuger auszugeben, wenn das Vorhandensein von Impulsstörungen durch den Impulsstörungsdetektor festgestellt ist.

20. Impulsstörungen-Unterdrückungssystem (1400, 1600) gemäß Anspruch 11, **dadurch gekennzeichnet, dass** das Impulsstörungen-Unterdrückungssystem (1400, 1600) ferner mit einem Demodulator für das OFDM-Kommunikationssystem gekoppelt ist, um das geschätzte, impulsstörungsfreie Signal bei allen Hilfsträgern, das von dem Frequenzbereich-Impulsstörungen-Unterdrückungsmodul (1450, 1550, 1650) erzeugt wird, an den Demodulator zur weiteren Bearbeitung auszugeben.

21. Verfahren zum Unterdrücken von Impulsstörungen in einem Symbol eines Orthogonal Frequency Division Multiplexing(OFDM)-Kommunikationssystems, wobei das Verfahren umfasst:

(a) Feststellen des Vorhandenseins von Impulsstörungen in einem Symbol des OFDM-Kommunikationssystems;
(b) Erzeugen von Schneller-Fourier-Transformation(FFT) eines Symbols des OFDM-Kommunikationssystems;
**dadurch gekennzeichnet, dass** das Verfahren ferner umfasst:
(c1) Subtrahieren der vorhergesagten Pilothilfsträger des OFDM-Kommunikationssystems von FFTs von Symbolen des OFDM-Kommunikationssystems, die in Schritt (b) bei Pilothilfsträgern erzeugt worden sind, um geschätzte Impulsstörungen bei Pilothilfsträgern zu erzeugen; und
(c2) Abwärtswandeln der geschätzten Impulsstörungen bei Pilothilfsträgern zu einer langsam sich verändernden Wellenform gemäß einem Deskriptor, um eine geeignete Frequenz zum Abwärtswandeln der geschätzten Impulsstörungen bei den Pilothilfsträgern zur Verfügung zu stellen;
(d) Interpolieren der geschätzten Impulsstörungen bei den Pilothilfsträgern in der langsam sich verändernden Wellenform, um geschätzte Impulsstörungen bei allen Hilfsträgern des OFDM-Kommunikationssystems in der langsam sich verändernden Wellenform zu erlangen; und
(e1) Aufwärtswandeln der geschätzten Impulsstörungen bei allen Hilfsträgern in der langsam sich verändernden Wellenform zu der schnell sich verändernden Wellenform gemäß dem Deskriptor; und
(e2)Subtrahieren der geschätzten Impulsstörungen bei allen Hilfsträgern in der schnell sich verändernden Wellenform von den FFTs von Symbolen des OFDM-Kommunikationssystems bei allen Hilfsträgern, um das geschätzte, impulsstörungsfreie Signal bei allen Hilfsträgern zu erlangen.

22. Verfahren gemäß Anspruch 21, **dadurch gekennzeichnet, dass** das Verfahren ferner umfasst:

(f) Erzeugen des Deskriptors d gemäß Positionen der Impulsstörungsereignisse in einem Symbol, wenn das Vorhandensein der Impulsstörungen in den Symbolen festgestellt ist.

23. Verfahren gemäß Anspruch 22, **dadurch gekennzeichnet, dass** ein Symbol des OFDM-Kommunikationssystems N Abtastwerte enthält; wobei Schritt (f) ferner umfasst:

(g) Verwenden eines Deskriptors Ns, um eine Startposition des Impulsereignisses darzustellen, und eines Deskriptors Ne, um eine Endposition des Impulsereignisses darzustellen, wenn es in dem Symbol ein Impulsereignis gibt; und
(h) Einstellen des Deskriptors d als (Ns+Ne)/2.

24. Verfahren gemäß Anspruch 22, **dadurch gekennzeichnet, dass** ein Symbol des OFDM-Kommunikationssystems N Abtastwerte enthält; wobei Schritt (f) ferner umfasst:

(g) Verwenden eines Deskriptors Ns, um eine Startposition des zweiten Impulsereignisses darzustellen, und eines Deskriptors Ne, um eine Endposition des ersten Impulsereignisses darzustellen, wenn es eine Vielzahl von Impulsereignissen in dem Symbol gibt, und eine Anzahl von Abtastwerten zwischen einem ersten Impulsereignis und einem zweiten Impulsereignis größer als N/2 ist, wobei der erste Impuls dem zweiten Impulsereignis vorangeht ; und
(h) Einstellen des Deskriptors d als (Ns+Ne)/2.

**25.** Verfahren gemäß Anspruch 22, **dadurch gekennzeichnet, dass** ein Symbol des OFDM-Kommunikationssystems N Abtastwerte enthält; wobei Schritt (f) ferner umfasst:

(g) Verwenden eines Deskriptors Ns, um eine Startposition eines ersten Impulsereignisses darzustellen, und eines Deskriptors Ne, um eine Endposition eines zweiten Impulsereignisses darzustellen, wobei des erste Impulsereignis dem zweiten Impulsereignis benachbart ist, wenn es eine Vielzahl von Impulsereignissen in dem Symbol gibt, und eine Anzahl von Abtastwerten zwischen jeden zweiten benachbarten Impulsereignissen nicht größer als N/2 ist; und
(h) Einstellen des Deskriptors d als (Ns+Ne)/2.

**26.** Verfahren gemäß Anspruch 21, **dadurch gekennzeichnet, dass** Schritt (a) umfasst:

Feststellen des Vorhandenseins von Impulsstörungen in dem Symbol des OFDM-Kommunikationssystems, wenn Absolutwerte von P Abtastwerten von Q aufeinander folgenden Abtastwerten in dem Symbol größer als ein Schwellenwert sind.

**27.** Verfahren gemäß Anspruch 26, **dadurch gekennzeichnet, dass** Schritt (a) umfasst:

(f) Festsetzen eines Absolutwertes eines Abtastwertes des Symbols;
(g) Erzeugen eines ersten Wertes, wenn der Absolutwert größer als der Schwellenwert ist;
(h) Berechnen einer Summe von Q aufeinander folgenden Werten, wobei jeder der Q aufeinander folgenden Werte einen Sättigungszustand eines Abtastwertes des Symbols darstellt; und
(i) Bestimmen des Vorhandenseins von Impulsstörungen in dem Symbol des OFDM-Kommunikationssystems, wenn die in dem Schritt (h) berechnete Summe einer vorbestimmten Vorschrift entspricht.

**28.** Verfahren gemäß Anspruch 26, **dadurch gekennzeichnet, dass** Schritt (a) umfasst:

(f) Festsetzen eines Absolutwertes eines Abtastwertes des Symbols;
(g) Erzeugen eines zweiten Wertes, wenn der Eingangsabsolutwert nicht größer als der Schwellenwert ist;
(h) Berechnen einer Summe von Q aufeinander folgenden Werten, wobei jeder der Q aufeinander folgenden Werte einen Sättigungszustand eines Abtastwertes des Symbols darstellt; und
(i) Bestimmen des Vorhandenseins von Impulsstörungen in dem Symbol des OFDM-Kommunikationssystems, wenn die in dem Schritt (h) berechnete Summe einer vorbestimmten Vorschrift entspricht.

**29.** Verfahren gemäß Anspruch 21, **dadurch gekennzeichnet, dass** das Verfahren ferner umfasst:

(f) Zwischenspeichern von Abtastwerten des Symbols des OFDM-Kommunikationssystems; und
(g) Erzeugen von Ersatzabtastwerten gemäß einer vorbestimmten Vorschrift, wenn das Vorhandensein von Impulsstörungen festgestellt ist;

wobei Schritt (b) FFT der Ersatzabtastwerte erzeugt, wenn das Vorhandensein von Impulsstörungen festgestellt ist.

**30.** Verfahren gemäß Anspruch 21, **dadurch gekennzeichnet, dass** das Verfahren ferner umfasst:

(f) ringförmiges Schiften von Abtastwerten eines Symbols um einen ersten Abstand, wenn das Vorhandensein von Impulsstörungen in dem Symbol festgestellt ist;

wobei Schritt (b) FFT des Symbols erzeugt, von dem die Abtastwerte in Schritt (f) ringförmig geschiftet sind.

**31.** Verfahren gemäß Anspruch 30, **dadurch gekennzeichnet, dass** Schritt (c) umfasst:

(g) Abwärtswandeln der vorhergesagten Pilothilfsträger des OFDM-Kommunikationssystems zu der langsam sich verändernden Wellenform gemäß dem Deskriptor; und
(h) Subtrahieren der vorhergesagten Pilothilfsträger des OFDM-Kommunikationssystems in der langsam sich verändernden Wellenform von den FFTs von Symbolen des OFDM-Kommunikationssystems bei Pilothilfsträgern, um geschätzte Impulsstörungen bei Pilothilfsträgern in der langsam sich verändernden Wellenform zu erzeugen.

32. Verfahren gemäß Anspruch 30, **dadurch gekennzeichnet, dass** Schritt (e) umfasst:

(g) Subtrahieren der geschätzten Impulsstörungen bei Pilothilfsträgern in der langsam sich verändernden Wellenform von den FFTs von Symbolen des OFDM-Kommunikationssystems bei allen Hilfsträgern, um das geschätzte, impulsstörungsfreie Signal bei allen Hilfsträgern in der langsam sich verändernden Wellenform zu erlangen; und
(h) Aufwärtswandeln des geschätzten, impulsstörungsfreien Signals bei allen Hilfsträgern in der langsam sich verändernden Wellenform zu der schnell sich verändernden Wellenform gemäß dem Deskriptor.

33. Verfahren gemäß Anspruch 30, **dadurch gekennzeichnet, dass** das Verfahren ferner umfasst:

(g) Bestimmen des ersten Abstands gemäß dem Deskriptor.

34. Verfahren gemäß Anspruch 30, **dadurch gekennzeichnet, dass** der erste Abstand ein vorbestimmter Abstand ist.


**Revendications**

1. Système de réjection de bruit d'impulsions pour un système de télécommunications à multiplexage par répartition orthogonale de la fréquence (OFDM), le système de réjection de bruit d'impulsions comprenant :

un détecteur de bruit d'impulsions (320, 620, 1100) qui est couplé à une entrée du système de réjection de bruit d'impulsions pour détecter la présence d'un bruit d'impulsions dans un symbole d'entrée du système de réjection de bruit d'impulsions ; et
un module de transformée de Fourier rapide (TFR) (340, 640, 1300) qui est couplé à l'entrée du système de réjection de bruit d'impulsions pour générer une TFR de symbole ; et
un module de réjection de bruit d'impulsions dans le domaine fréquentiel (350, 450, 550, 650) ;
**caractérisé en ce que** le module de réjection de bruit d'impulsions dans le domaine fréquentiel (350, 450, 550, 650) comprend :

une première unité opérationnelle (352, 452, 552), comprenant un soustracteur (4521) qui est couplé au module TFR (340, 640, 1300) pour soustraire des ondes sous-porteuses pilotes prédites du système de télécommunications OFDM à partir de signaux reçus du module TFR (340, 640,1300) au niveau d'ondes sous-porteuses pilotes afin de générer un bruit d'impulsions estimé au niveau d'ondes sous-porteuses pilotes ; et un convertisseur (4522) qui est couplé au soustracteur (4521) pour convertir à la baisse le bruit d'impulsions estimé au niveau d'ondes sous-porteuses pilotes de façon à obtenir une forme d'onde à variation lente conformément à un descripteur pour fournir une fréquence appropriée pour convertir à la baisse le bruit d'impulsions estimé au niveau d'ondes sous-porteuses pilotes ;
un interpolateur (354, 454, 554) qui est couplé à la première unité opérationnelle (352, 452, 552), pour interpoler le bruit d'impulsions estimé au niveau des ondes sous-porteuses pilotes dans la forme d'onde à variation lente de façon à obtenir un bruit d'impulsions estimé au niveau de la totalité des ondes sous-porteuses du système de télécommunications OFDM dans la forme d'onde à variation lente ; et
une deuxième unité opérationnelle (356, 456, 556) comprenant un convertisseur (4561) qui est couplé à l'interpolateur (454) pour convertir à la hausse le bruit d'impulsions estimé au niveau de la totalité des ondes sous-porteuses dans la forme d'onde à variation lente de façon à obtenir la forme d'onde à variation rapide conformément au descripteur ; et un soustracteur (4562) qui est couplé au module TFR (340, 640, 1300) pour soustraire le bruit d'impulsions estimé au niveau de la totalité des ondes sous-porteuses dans la forme d'onde à variation rapide à partir de signaux reçus du module TFR (340, 640, 1300) au niveau de la totalité des ondes sous-porteuses de façon à obtenir le signal exempt de bruit d'impulsions estimé au niveau de la totalité des ondes sous-porteuses.

2. Système de réjection de bruit d'impulsions selon la revendication 1 **caractérisé en ce que** la première unité opérationnelle (352, 552), comprend :

un premier convertisseur (5521) qui est couplé au module TFR (340, 640, 1300) pour convertir à la baisse de signaux de façon à obtenir une forme d'onde à variation lente ;

un deuxième convertisseur (5523) pour convertir à la baisse le bruit d'impulsions estimé au niveau d'ondes sous-porteuses pilotes de façon à obtenir la forme d'onde à variation lente conformément au descripteur ; et

un soustracteur (5522) qui est couplé au premier convertisseur (5521) et au deuxième convertisseur (5523) pour soustraire les ondes sous-porteuses pilotes prédites du système de télécommunications OFDM dans la forme d'onde à variation lente à partir des signaux convertis à la baisse par le premier convertisseur (5521) de façon à obtenir le bruit d'impulsions estimé au niveau d'ondes sous-porteuses pilotes dans une forme d'onde à variation lente.

3. Système de réjection de bruit d'impulsions selon la revendication 1 **caractérisé en ce que** la deuxième unité opérationnelle (356, 556) comprend :

un soustracteur (5561) qui est couplé à l'interpolateur (354, 554) pour soustraire le bruit d'impulsions estimé au niveau de la totalité des ondes sous-porteuses dans la forme d'onde à variation rapide à partir de signaux reçus du module TFR (340, 640, 1300) au niveau de la totalité des ondes sous-porteuses de façon à obtenir le signal exempt de bruit d'impulsions estimé au niveau de la totalité des ondes sous-porteuses dans la forme d'onde à variation rapide ; et

un convertisseur (5562) qui est couplé au soustracteur (5561) de la deuxième unité opérationnelle (356, 556) pour convertir à la hausse le bruit d'impulsions estimé au niveau de la totalité des ondes sous-porteuses dans la forme d'onde à variation lente de façon à obtenir la forme d'onde à variation rapide conformément au descripteur.

4. Système de réjection de bruit d'impulsions selon la revendication 1 **caractérisé en ce que** le système de réjection de bruit d'impulsions comprend par ailleurs :

un contrôleur (630) de réjection de bruit d'impulsions (INR) qui est couplé au détecteur de bruit d'impulsions (620, 1100) et au module de réjection de bruit d'impulsions dans le domaine fréquentiel (650) pour générer le descripteur sur la base de positions d'événements de bruit d'impulsions dans un symbole quand la présence du bruit d'impulsions dans le symbole est détectée par le détecteur de bruit d'impulsions (620, 1100).

5. Système de réjection de bruit d'impulsions selon la revendication 1 **caractérisé en ce que** le détecteur de bruit d'impulsions (620, 1100) comprend :

un évaluateur de valeur absolue (1120) qui est couplé à l'entrée du système de réjection de bruit d'impulsions pour calculer une valeur absolue d'un échantillon du symbole ;

un détecteur de saturation (1140, 1200) qui est couplé à l'évaluateur de valeur absolue (1120) pour générer une première valeur quand la valeur absolue entrée est supérieure à une valeur de seuil et pour générer une deuxième valeur quand la valeur absolue entrée n'est pas supérieure à la valeur de seuil ;

un tampon (1160) qui est couplé au détecteur de saturation (1140, 1200) pour mettre en tampon des valeurs délivrées par le détecteur de saturation (1140, 1200) ; et

un calculateur de saturation (1180) qui est couplé au tampon (1160) pour calculer une somme de Q valeurs successives générées par le détecteur de saturation (1140, 1200).

6. Système de réjection de bruit d'impulsions selon la revendication 5 **caractérisé en ce que** la valeur de seuil est prédéterminée.

7. Système de réjection de bruit d'impulsions selon la revendication 5 **caractérisé en ce que** la valeur de seuil correspond à une enveloppe de la valeur absolue entrée du détecteur de saturation (1140, 1200).

8. Système de réjection de bruit d'impulsions selon la revendication 1 **caractérisé en ce que** le module TFR (1300) comprend un suppresseur de bruit d'impulsions (1320) qui est couplé à l'entrée du système de réjection de bruit d'impulsions ainsi qu'au détecteur de bruit d'impulsions (320, 620, 1100) pour mettre en tampon des échantillons d'entrée du système de réjection de bruit d'impulsions, pour délivrer en sortie des échantillons mis en tampon quand la présence d'un bruit d'impulsions n'est pas détectée par le détecteur de bruit d'impulsions (320, 620, 1100), et pour délivrer en sortie un ensemble d'échantillons de substitution au lieu des échantillons mis en tampon quand la présence d'un bruit d'impulsions est détectée par le détecteur de bruit d'impulsions (320, 620, 1100).

**9.** Système de réjection de bruit d'impulsions selon la revendication 8 **caractérisé en ce que** le suppresseur de bruit d'impulsions (1320) comprend :

un tampon (1322) pour mettre en tampon des échantillons d'entrée ;

un générateur d'échantillons de substitution (1324) pour générer des échantillons de substitution conformément à une règle prédéterminée quand la présence d'un bruit d'impulsions est détectée par le détecteur de bruit d'impulsions (320, 620, 1100) ; et

un multiplexeur (1326) qui est couplé au tampon (1322) et au générateur d'échantillons de substitution (1324) pour délivrer en sortie des échantillons à partir du tampon (1322) quand la présence d'un bruit d'impulsions n'est pas détectée par le détecteur de bruit d'impulsions (320, 620, 1100), et pour délivrer en sortie des échantillons de substitution à partir du générateur d'échantillons de substitution (1324) quand la présence d'un bruit d'impulsions est détectée par le détecteur de bruit d'impulsions (320, 620, 1100).

**10.** Système de réjection de bruit d'impulsions selon la revendication 1 **caractérisé en ce que** le système de réjection de bruit d'impulsions est couplé à un démodulateur pour le système de télécommunications OFDM pour envoyer le signal exempt de bruit d'impulsions estimé au niveau de la totalité des ondes sous-porteuses générées par le module de réjection de bruit d'impulsions dans le domaine fréquentiel (350, 450, 550, 650) au démodulateur en vue d'un traitement supplémentaire.

**11.** Système de réjection de bruit d'impulsions (1400, 1600) pour un système de télécommunications à multiplexage par répartition orthogonale de la fréquence (OFDM), le système de réjection de bruit d'impulsions (1400, 1600) comprenant:

un détecteur de bruit d'impulsions (1100, 1420, 1620) qui est couplé à l'entrée du système de réjection de bruit d'impulsions (1400, 1600) pour détecter la présence d'un bruit d'impulsions dans un symbole d'entrée du système de réjection de bruit d'impulsions (1400, 1600) ;

un décaleur circulaire (1460, 1660) qui est couplé à l'entrée du système de réjection de bruit d'impulsions (1400, 1600) pour décaler circulairement des échantillons d'un symbole par une première distance quand la présence du bruit d'impulsions dans le symbole est détectée par le détecteur de bruit d'impulsions (1100, 1420, 1620) ;

un module de transformée de Fourier rapide (TFR) (1300, 1440, 1640) qui est couplé au décaleur circulaire (1460, 1660) pour générer une TFR de symboles ; et

un module de réjection de bruit d'impulsions dans le domaine fréquentiel (1450, 1550, 1650) ;

**caractérisé en ce que** le module de réjection de bruit d'impulsions dans le domaine fréquentiel (1450, 1550, 1650) comprend :

une première unité opérationnelle (1452, 1552), comprenant un convertisseur (15521) pour convertir à la baisse des ondes sous-porteuses pilotes prédites du système de télécommunications OFDM de façon à obtenir une forme d'onde à variation lente conformément à un descripteur pour fournir une fréquence appropriée pour convertir à la baisse le bruit d'impulsions estimé au niveau d'ondes sous-porteuses pilotes ;

et un soustracteur (15522) qui est couplé au module TFR (1300, 1440, 1640) et à l'interpolateur (1454, 1554) pour soustraire les ondes sous-porteuses pilotes prédites converties à la baisse du système de télécommunications OFDM dans la forme d'onde à variation lente à partir de signaux reçus du module TFR (1300, 1440, 1640) au niveau d'ondes sous-porteuses pilotes afin de générer un bruit d'impulsions estimé au niveau d'ondes sous-porteuses pilotes dans la forme d'onde à variation lente ;

un interpolateur (1454, 1554) qui est couplé à la première unité opérationnelle (1452, 1552), pour interpoler le bruit d'impulsions estimé au niveau des ondes sous-porteuses pilotes dans la forme d'onde à variation lente de façon à obtenir un bruit d'impulsions estimé au niveau de la totalité des ondes sous-porteuses du système de télécommunications OFDM dans la forme d'onde à variation lente ; et

une deuxième unité opérationnelle (1456, 1556) comprenant un soustracteur (15561) qui est couplé au module TFR (1300, 1440, 1640) pour soustraire le bruit d'impulsions estimé au niveau de la totalité des ondes sous-porteuses dans la forme d'onde à variation lente à partir des signaux reçus du module TFR (1300, 1440, 1640) au niveau de la totalité des ondes sous-porteuses de façon à obtenir le signal exempt de bruit d'impulsions estimé au niveau de la totalité des ondes sous-porteuses dans la forme d'onde à variation lente ; et un convertisseur (15562) qui est couplé au soustracteur (15561) pour convertir à la hausse le signal exempt de bruit d'impulsions estimé au niveau de la totalité des ondes sous-porteuses dans la forme d'onde à variation lente de façon à obtenir la forme d'onde à variation rapide conformément au descripteur.

**12.** Système de réjection de bruit d'impulsions (1400, 1600) selon la revendication 11 **caractérisé en ce que** le système de réjection de bruit d'impulsions (1400, 1600) comprend par ailleurs :

un contrôleur (630, 1430, 1630) de réjection de bruit d'impulsions (INR) qui est couplé au détecteur de bruit d'impulsions (1100, 1420, 1620) et au module de réjection de bruit d'impulsions dans le domaine fréquentiel (1450, 1550, 1650) pour générer le descripteur sur la base de positions d'événements de bruit d'impulsions dans un symbole quand la présence du bruit d'impulsions dans le symbole est détectée par le détecteur de bruit d'impulsions (1100, 1420, 1620).

**13.** Système de réjection de bruit d'impulsions (1400, 1600) selon la revendication 11 **caractérisé en ce que** la première distance est déterminée conformément au descripteur.

**14.** Système de réjection de bruit d'impulsions (1400, 1600) selon la revendication 11 **caractérisé en ce que** les échantillons du symbole sont décalés circulairement par le décaleur circulaire (1460, 1660) de telle sorte que le centre de la durée du bruit d'impulsions du symbole se situe au niveau de l'échantillon immédiatement précédent du symbole.

**15.** Système de réjection de bruit d'impulsions (1400, 1600) selon la revendication 11 **caractérisé en ce que** le détecteur de bruit d'impulsions (1100, 1420, 1620) comprend :

un évaluateur de valeur absolue (1120) qui est couplé à l'entrée du système de réjection de bruit d'impulsions (1400, 1600) pour calculer une valeur absolue d'un échantillon du symbole ;
un détecteur de saturation (1140, 1200) qui est couplé à l'évaluateur de valeur absolue (1120) pour générer une première valeur quand la valeur absolue entrée est supérieure à une valeur de seuil et pour générer une deuxième valeur quand la valeur absolue entrée n'est pas supérieure à la valeur de seuil ;
un tampon (1160) qui est couplé au détecteur de saturation (1140, 1200) pour mettre en tampon des valeurs délivrées par le détecteur de saturation (1140, 1200) ; et
un calculateur de saturation (1180) qui est couplé au tampon (1160) pour calculer une somme de Q valeurs successives générées par le détecteur de saturation (1140, 1200).

**16.** Système de réjection de bruit d'impulsions (1400, 1600) selon la revendication 15 **caractérisé en ce que** la valeur de seuil est prédéterminée.

**17.** Système de réjection de bruit d'impulsions selon la revendication 15 **caractérisé en ce que** la valeur de seuil correspond à une enveloppe de la valeur absolue entrée du détecteur de saturation.

**18.** Système de réjection de bruit d'impulsions (1400, 1600) selon la revendication 11 **caractérisé en ce que** le décaleur circulaire (1460, 1660) comprend un suppresseur de bruit d'impulsions (1662) qui est couplé à l'entrée du système de réjection de bruit d'impulsions (1400, 1600) ainsi qu'au détecteur de bruit d'impulsions (1100, 1420, 1620) pour mettre en tampon des échantillons d'entrée du système de réjection de bruit d'impulsions (1400, 1600), pour délivrer en sortie des échantillons mis en tampon quand la présence d'un bruit d'impulsions n'est pas détectée par le détecteur de bruit d'impulsions (1100, 1420, 1620), et pour délivrer en sortie un ensemble d'échantillons de substitution au lieu des échantillons mis en tampon quand la présence d'un bruit d'impulsions est détectée par le détecteur de bruit d'impulsions (1100, 1420, 1620).

**19.** Système de réjection de bruit d'impulsions (1400, 1600) selon la revendication 18 **caractérisé en ce que** le suppresseur de bruit d'impulsions (1662) comprend :

un tampon pour mettre en tampon des échantillons d'entrée ;
un générateur d'échantillons de substitution pour générer des échantillons de substitution conformément à une règle prédéterminée quand la présence d'un bruit d'impulsions est détectée par le détecteur de bruit d'impulsions ; et
un multiplexeur qui est couplé au tampon et au générateur d'échantillons de substitution pour délivrer en sortie des échantillons à partir du tampon quand la présence d'un bruit d'impulsions n'est pas détectée par le détecteur de bruit d'impulsions, et pour délivrer en sortie des échantillons de substitution à partir du générateur d'échantillons de substitution quand la présence d'un bruit d'impulsions est détectée par le détecteur de bruit d'impulsions.

**20.** Système de réjection de bruit d'impulsions (1400, 1600) selon la revendication 11 **caractérisé en ce que** le système de réjection de bruit d'impulsions (1400, 1600) est couplé par ailleurs à un démodulateur pour le système de télécommunications OFDM pour envoyer le signal exempt de bruit d'impulsions estimé au niveau de la totalité des ondes sous-porteuses générées par le module de réjection de bruit d'impulsions dans le domaine fréquentiel (1450, 1550, 1650) au démodulateur en vue d'un traitement supplémentaire.

**21.** Procédé de réjection de bruit d'impulsions dans un symbole d'un système de télécommunications à multiplexage par répartition orthogonale de la fréquence (OFDM), le procédé comprenant les étapes consistant à :

(a) détecter la présence d'un bruit d'impulsions dans un symbole du système de télécommunications OFDM ;
(b) générer une transformée de Fourier rapide (TFR) d'un symbole du système de télécommunications OFDM ;
**caractérisé en ce que** le procédé comprend par ailleurs les étapes consistant à :
(c1) soustraire des ondes sous-porteuses pilotes prédites du système de télécommunications OFDM de symboles du système de télécommunications OFDM générés au cours de l'étape (b) au niveau d'ondes sous-porteuses pilotes de façon à générer un bruit d'impulsions estimé au niveau d'ondes sous-porteuses pilotes ; et
(c2) convertir à la baisse le bruit d'impulsions estimé au niveau d'ondes sous-porteuses pilotes de façon à obtenir une forme d'onde à variation lente conformément à un descripteur pour fournir une fréquence appropriée pour convertir à la baisse le bruit d'impulsions estimé au niveau d'ondes sous-porteuses pilotes ;
(d) interpoler le bruit d'impulsions estimé au niveau des ondes sous-porteuses pilotes dans la forme d'onde à variation lente de façon à obtenir un bruit d'impulsions estimé au niveau de la totalité des ondes sous-porteuses du système de télécommunications OFDM dans la forme d'onde à variation lente ; et
(e1) convertir à la hausse le bruit d'impulsions estimé au niveau de la totalité des ondes sous-porteuses dans la forme d'onde à variation lente de façon à obtenir la forme d'onde à variation rapide conformément au descripteur ; et
(e2) soustraire le bruit d'impulsions estimé au niveau de la totalité des ondes sous-porteuses dans la forme d'onde à variation rapide à partir des TFR de symboles du système de télécommunications OFDM au niveau de la totalité des ondes sous-porteuses de façon à obtenir le signal exempt de bruit d'impulsions estimé au niveau de la totalité des ondes sous-porteuses.

**22.** Procédé selon la revendication 21 **caractérisé en ce que** le procédé comprend par ailleurs l'étape consistant à :

(f) générer le descripteur sur la base de positions d'événements de bruit d'impulsions dans un symbole quand la présence du bruit d'impulsions dans le symbole est détectée.

**23.** Procédé selon la revendication 22 **caractérisé en ce qu'**un symbole du système de télécommunications OFDM contient N échantillons ; dans lequel l'étape (f) comprend par ailleurs les opérations suivantes :

(g) quand il n'existe qu'un seul événement d'impulsions dans le symbole, utiliser un descripteur Ns pour représenter une position de début de l'événement d'impulsions, et un descripteur Ne pour représenter une position de fin de l'événement d'impulsions ; et
(h) définir le descripteur d en tant que (Ns + Ne)/2.

**24.** Procédé selon la revendication 22 **caractérisé en ce qu'**un symbole du système de télécommunications OFDM contient N échantillons ; dans lequel l'étape (f) comprend par ailleurs les opérations suivantes :

(g) quand il existe une pluralité d'événements d'impulsions dans le symbole, et qu'un nombre d'échantillons entre un premier événement d'impulsions il y a un deuxième événement d'impulsions est plus élevé que N/2, dans lequel le premier événement d'impulsions précède le deuxième événement d'impulsions, utiliser un descripteur Ns pour représenter une position de début du deuxième événement d'impulsions, et un descripteur Ne pour représenter une position de fin du premier événement d'impulsions ; et
(h) définir le descripteur d en tant que (Ns + Ne)/2.

**25.** Procédé selon la revendication 22 **caractérisé en ce qu'**un symbole du système de télécommunications OFDM contient N échantillons ; dans lequel l'étape (f) comprend par ailleurs les opérations suivantes :

(g) quand il existe une pluralité d'événements d'impulsions dans le symbole, et qu'un nombre d'échantillons entre deux événements d'impulsions adjacents n'est pas plus élevé que N/2, utiliser un descripteur Ns pour représenter une position de début du premier événement d'impulsions, et un descripteur Ne pour représenter une position de fin d'un deuxième événement d'impulsions, dans lequel le premier événement d'impulsions est adjacent au deuxième événement d'impulsions ; et

(h) définir le descripteur d en tant que (Ns + Ne)/2.

**26.** Procédé selon la revendication 21 **caractérisé en ce que** l'étape (a) comprend l'opération consistant à :

déterminer la présence d'un bruit d'impulsions dans le symbole du système de télécommunications OFDM quand des valeurs absolues de P échantillons de Q échantillons successifs dans le symbole sont supérieures à une valeur de seuil.

**27.** Procédé selon la revendication 26 **caractérisé en ce que** l'étape (a) comprend les opérations consistant à :

(f) évaluer une valeur absolue d'un échantillon du symbole ;

(g) générer une première valeur quand la valeur absolue est supérieure à la valeur de seuil ;

(h) calculer une somme de Q valeurs successives, dans lequel chacune des Q valeurs successives représente un état de saturation d'un échantillon du symbole ; et

(i) déterminer la présence d'un bruit d'impulsions dans le symbole du système de télécommunications OFDM quand la somme calculée à l'étape (h) est conforme à une règle prédéterminée.

**28.** Procédé selon la revendication 26 **caractérisé en ce que** l'étape (a) comprend les opérations consistant à :

(f) évaluer une valeur absolue d'un échantillon du symbole ;

(g) générer une deuxième valeur quand la valeur absolue d'entrée n'est pas supérieure à la valeur de seuil ;

(h) calculer une somme de Q valeurs successives, dans lequel chacune des Q valeurs successives représente un état de saturation d'un échantillon du symbole ; et

(i) déterminer la présence d'un bruit d'impulsions dans le symbole du système de télécommunications OFDM quand la somme calculée à l'étape (h) est conforme à une règle prédéterminée.

**29.** Procédé selon la revendication 21 **caractérisé en ce que** le procédé comprend par ailleurs les étapes consistant à :

(f) mettre en tampon de l'échantillon du symbole du système de télécommunications OFDM ; et

(g) générer des échantillons de substitution conformément à une règle prédéterminée quand la présence du bruit d'impulsions est détectée ;

dans lequel l'étape (b) génère une TFR d'échantillons de substitution quand la présence du bruit d'impulsions est détectée.

**30.** Procédé selon la revendication 21 **caractérisé en ce que** le procédé comprend par ailleurs l'étape consistant à :

(f) décaler circulairement des échantillons d'un symbole par une première distance quand la présence du bruit d'impulsions dans le symbole est détectée ;

dans lequel l'étape (b) génère une TFR du symbole dont les échantillons sont décalés circulairement au cours de l'étape (f).

**31.** Procédé selon la revendication 30 **caractérisé en ce que** l'étape (c) comprend les opérations consistant à :

(g) convertir à la baisse les ondes sous-porteuses pilotes prédites du système de télécommunications OFDM de façon à obtenir la forme d'onde à variation lente conformément au descripteur ; et

(h) soustraire les ondes sous-porteuses pilotes prédites du système de télécommunications OFDM dans la forme d'onde à variation lente à partir des TFR de symboles du système de télécommunications OFDM au niveau d'ondes sous-porteuses pilotes de façon à générer un bruit d'impulsions estimé au niveau d'ondes sous-porteuses pilotes dans la forme d'onde à variation lente.

**32.** Procédé selon la revendication 30 **caractérisé en ce que** l'étape (e) comprend les opérations consistant à :

(g) soustraire le bruit d'impulsions estimées au niveau d'ondes sous-porteuses pilotes dans la forme d'onde à variation lente à partir des TFR de symboles du système de télécommunications OFDM au niveau de la totalité des ondes sous-porteuses de façon à obtenir le signal exempt de bruit d'impulsions estimé au niveau de la totalité des ondes sous-porteuses dans la forme d'onde à variation lente ; et

(h) convertir à la hausse le signal exempt de bruit d'impulsions estimé au niveau de la totalité des ondes sous-porteuses dans la forme d'onde à variation lente de façon à obtenir la forme d'onde à variation rapide conformément au descripteur.

**33.** Procédé selon la revendication 30 **caractérisé en ce que** le procédé comprend par ailleurs l'étape consistant à :

(g) déterminer la première distance conformément au descripteur.

**34.** Procédé selon la revendication 30 **caractérisé en ce que** la première distance est une distance prédéterminée.

Fig. 1 Prior Art

Fig. 2 Prior Art

EP 1 684 479 B1

Fig. 3

350

310 ADC

r(n)+p(n)

340 FFT module

320 Impulse noise detector

$\{R(k)+P(k)|k\in all\}$

$\{R(k)+P(k)|k\in pilot\}$

352 First operating unit

$\{\hat{P}_{slow}(k)|k\in pilot\}$

354 Interpolator

$\{\hat{P}_{slow}(k)|k\in all\}$

356 Second operating unit

$\{\hat{R}(k)|k\in all\}$

30

Fig. 4

Fig. 5

EP 1 684 479 B1

Fig. 6

Fig. 7

Fig. 8

Fig. 9

EP 1 684 479 B1

Fig. 10

Fig. 11

EP 1 684 479 B1

Fig. 12

EP 1 684 479 B1

Fig. 13

EP 1 684 479 B1

Fig. 14

1460

Circular shifter

$r_{slow}(n)+p_{slow}(n)$

$r(n)+p(n)$

1410

ADC

1440

FFT module

1420

Impulse noise detector

1430

INR controller

d

1450

1456

Second operating unit

$\{\hat{R}(k)|k\in all\}$

$\{R_{slow}(k)+P_{slow}(k)|k\in all\}$

$\{R(k)_{slow}+P(k)_{slow}|k\in pilot\}$

1452

First operating unit

$\{\hat{P}_{slow}(k)|k\in pilot\}$

$\{\hat{P}_{slow}(k)|k\in all\}$

Interpolator ~1454

Frequency domain impulse noise rejection module

d

1400

EP 1 684 479 B1

41

Fig. 15

EP 1 684 479 B1

EP 1 684 479 B1

Fig. 16

Fig. 17

Fig. 18